(19) Europäisches Patentamt
European Patent Office
Office européen des brevets

(11) EP 3 558 707 B1

(12) # FASCICULE DE BREVET EUROPEEN

(45) Date de publication et mention de la délivrance du brevet:
**02.06.2021 Bulletin 2021/22**

(21) Numéro de dépôt: **17832282.2**

(22) Date de dépôt: **21.12.2017**

(51) Int Cl.:
***B60C 1/00*** (2006.01) ***C08G 63/08*** (2006.01)
***C08L 53/02*** (2006.01) ***C08L 67/04*** (2006.01)
***C08K 3/04*** (2006.01) ***C08K 3/36*** (2006.01)
***C08K 5/54*** (2006.01) ***C08L 9/00*** (2006.01)

(86) Numéro de dépôt international:
**PCT/FR2017/053800**

(87) Numéro de publication internationale:
**WO 2018/115779 (28.06.2018 Gazette 2018/26)**

(54) **COMPOSITION DE CAOUTCHOUC COMPRENANT UN COPOLYMÈRE POLYDIÈNE / POLYLACTIDE**

KAUTSCHUKZUSAMMENSETZUNG MIT EINEM POLYDIEN-POLYLACTID/COPOLYMER

RUBBER COMPOSITION COMPRISING A POLYDIENE-POLYLACTIDE / COPOLYMER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2016 FR 1663041**

(43) Date de publication de la demande:
**30.10.2019 Bulletin 2019/44**

(73) Titulaire: **Compagnie Générale des Etablissements Michelin**
**63000 Clermont-Ferrand (FR)**

(72) Inventeurs:
- **DRONET, Séverin**
**63040 Clermont-Ferrand cedex 9 (FR)**
- **MIOCHE, Gilles**
**63040 Clermont-Ferrand cedex 9 (FR)**
- **MAISONNEUVE, Lise**
**63040 Clermont-Ferrand cedex 9 (FR)**
- **COSTE, Nathalie**
**63040 Clermont-Ferrand cedex 9 (FR)**
- **CAYUELA, Julien**
**59880 Saint-Saulve (FR)**
- **BONNAUD, Leila**
**59300 Valenciennes (FR)**
- **DUBOIS, Philippe Ghislain**
**B-4260 Ciplet (BE)**

(74) Mandataire: **Bocchi, Brigitte**
**M. F. P. Michelin**
**23, place des Carmes-Déchaux**
**Service juridique - Propriété Intellectuelle**
**DCJ/PI - F35 - Site de Ladoux**
**63040 Clermont-Ferrand Cedex 9 (FR)**

(56) Documents cités:
**JP-A- 2010 001 439** **JP-A- 2012 158 738**
**JP-A- 2012 158 738**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention concerne un pneumatique dont un de ses éléments constitutifs comprend une composition de caoutchouc comprenant un copolymère polydiène / polylactide. Ces copolymères associent un squelette élastomère et des blocs rigides et présentent ainsi des propriétés d'élastomère thermoplastique.

Afin de modifier les propriétés des élastomères synthétiques contenus dans les compositions de caoutchouc pour pneumatiques, différentes stratégies sont possibles. Parmi celles-ci, la réaction des élastomères diéniques avec d'autres polymères est une des méthodes employées.

Les inventeurs s'intéressent plus particulièrement dans le cadre de l'invention à la préparation de copolymères à blocs en peigne ou tri-blocs associant un squelette élastomère et des blocs rigides pendants ou aux extrémités. Ces copolymères présentent ainsi des propriétés d'élastomère thermoplastique (TPE).

Les matériaux à propriétés d'élastomère thermoplastique combinent les propriétés élastiques des élastomères et le caractère thermoplastique, à savoir la capacité de fondre et durcir, de manière réversible, sous l'action de la chaleur, des blocs pendants ou aux extrémités.

Dans le cadre de l'invention, pour le bloc thermoplastique, on recherche des polymères thermoplastiques ayant une température de fusion supérieure ou égale à 100°C, avantageusement allant de 100°C à 230°C.

L'acide polylactique, PLA, présente une température de fusion rentrant dans cette gamme.

La demande JP 2012 158 738 décrit des compositions pour pneumatiques comprenant un élastomère diénique greffé par de l'acide polylactique, PLA. Le copolymère est obtenu par réaction du polymère élastomère diénique et du polymère PLA. On note par ailleurs que la teneur en PLA dans le copolymère ne peut être que faible : au plus 10 parties en poids pour 100 parties de l'élastomère diénique.

La demande JP 2010 001 439 décrit un élément d'un pneumatique contenant une composition de caoutchouc comprenant 100 parties en poids d'un élastomère diénique, 1 à 100 parties en poids d'une charge inorganique et 0,01 à 10 parties en poids d'un copolymère à blocs ayant au moins un segment polylactide et au moins un segment élastomère diénique.

Dans le cadre de l'invention, on recherche, en particulier pour l'utilisation pneumatique, un matériau à propriétés d'élastomères thermoplastique. On recherche également un matériau qui puisse être fabriqué par un procédé continu, flexible et à bas coût, tel que, par exemple, par extrusion réactive. L'extrusion réactive est un procédé surtout utilisé pour des thermoplastiques, donc des polymères ayant des hautes températures de transition vitreuse ou de fusion, le cas échéant.

On entend par « lactide », dans le cadre de l'invention, le diester cyclique de l'acide lactique, c'est-à-dire de l'acide 2-hydroxypropionique. Le lactide répond à la formule suivante :

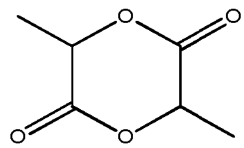

Le terme « lactide » recouvre toutes les configurations stéréoisomériques possibles du lactide : (R,R)-lactide, (S,S)-lactide et *meso*-lactide.

On entend par « acide polylactique » ou « PLA » ou « polylactide », dans le cadre de l'invention, le polymère obtenu par polymérisation par ouverture de cycle du lactide. L'unité répétitive du PLA peut être représentée par la formule $-[CH(CH_3)-C(O)-O]_n-$, le carbone asymétrique pouvant être de configuration R ou S.

Dans la présente description, par l'expression « le long du tronc » ou « le long de la chaîne » en se référant à un bloc PLA pendant du copolymère, il faut entendre que le copolymère comprend des groupements pendants de ce type en plusieurs endroits de la chaîne élastomère constitutive du tronc. Ceci inclut la ou les extrémités de la chaîne mais ne se limite pas à ces emplacements. Lorsqu'un bloc est présent en au moins une extrémité de chaîne, avantageusement le copolymère comprend également au moins un autre bloc pendant de ce type en une autre position dans la chaîne.

Les masses molaires sont déterminées par les méthodes décrites dans la partie « mesures et tests utilisés », selon la méthode chromatographie d'exclusion stérique en équivalent polystyrène (SEC). Dans la présente description, sauf indication expresse différente, toutes les masses molaires sont des masses molaires moyennes en nombre.

Dans la présente description, sauf indication expresse différente, tous les pourcentages (%) indiqués sont des pourcentages en masse.

Par ailleurs, le terme « pce » signifie au sens de l'invention, partie en poids pour cent parties d'élastomère total, donc y compris le copolymère polydiène / polylactide selon l'invention.

Dans la présente description, tout intervalle de valeurs désigné par l'expression "entre a et b" représente le

domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente description, les termes « fonctionnalisé » et « fonctionnel » seront utilisés de manière indifférée.

Les composés mentionnés dans la description et entrant dans la préparation de polymères ou de compositions de caoutchouc peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges.

La présente invention a pour objet un pneumatique dont un de ses éléments constitutifs comprend une composition de caoutchouc à base d'au moins une matrice élastomère comprenant un copolymère élastomère diénique /polylactide, le pourcentage massique en polylactide dans ledit copolymère étant compris entre 10% et 50% en poids, par rapport au poids du copolymère, dans lequel le copolymère élastomère diénique /polylactide est choisi parmi :

un copolymère tri-bloc, de structure PLA-élastomère diénique-PLA, de masse molaire moyenne en nombre, Mn, allant de 50 000 g/mol à 300 000 g/mol;
un copolymère peigne, ayant un tronc élastomère diénique et des blocs PLA pendants le long du tronc, de masse molaire moyenne en nombre, Mn, allant de 100 000 g/mol à 600 000 g/mol;
et
un copolymère di-bloc, de structure PLA-élastomère diénique, de masse molaire moyenne en nombre, Mn, allant de 25 000 g/mol à 200 000 g/mol;
les masses molaires sont déterminées par chromatographie d'exclusion stérique en équivalent polystyrène,
lorsque le copolymère est un copolymère tri-bloc ou un copolymère peigne, la composition peut ne pas contenir de système de réticulation,
lorsque le copolymère est un copolymère di bloc, la composition contient un système de réticulation,
le copolymère élastomère diénique /polylactide représentant au moins 65% en masse de la matrice élastomère.

Avantageusement, selon l'invention, dans le copolymère élastomère diénique /polylactide, le pourcentage massique en polylactide varie de 15% à 40 % en poids, par rapport au poids du copolymère.

Dans un premier mode de réalisation, de la présente invention le copolymère élastomère diénique /polylactide est un tri-bloc de structure PLA-élastomère diénique-PLA. Le tri-bloc élastomère diénique /polylactide est avantageusement de masse molaire moyenne en nombre, Mn, allant de 50000 g/mol à 300 000 g/mol. La masse molaire moyenne en nombre est déterminée par la méthode décrite en annexe, selon la méthode chromatographie d'exclusion stérique (SEC) en équivalent polystyrène. Dans un deuxième mode de réalisation, de la présente invention le copolymère élastomère diénique /polylactide est un copolymère peigne ayant un tronc élastomère diénique et des blocs PLA pendants le long du tronc. Ainsi, au moins un bloc PLA n'est pas terminal. Le copolymère peigne élastomère diénique /polylactide est de masse molaire moyenne en nombre, Mn, allant de 100 000 g/mol à 600 000 g/mol.

Dans un troisième mode de réalisation, de la présente invention, le copolymère élastomère diénique /polylactide est un di-bloc de structure PLA-élastomère diénique. Le di-bloc élastomère diénique /polylactide est de masse molaire moyenne en nombre, Mn, allant de 50000 g/mol à 200000 g/mol.

Avantageusement, selon l'invention, l'élastomère diénique est choisi parmi les polybutadiènes (en abrégé "BR"), les polyisoprènes (IR) de synthèse, le caoutchouc naturel (NR), les copolymères de butadiène, les copolymères d'isoprène, les copolymères d'éthylène et de diène et les mélanges de ces polymères.

Selon l'invention le copolymère élastomère diénique /polylactide représente au moins 65% en masse de la matrice élastomère.

Le copolymère précédemment décrit est suffisant à lui seul pour que soit utilisable la composition dans un élément constitutif d'un pneumatique, en particulier dans la bande de roulement.

Selon l'invention, lorsque le copolymère est un copolymère tri-bloc ou un copolymère peigne, la composition peut ne pas contenir de système de réticulation et lorsque le copolymère est un copolymère di bloc, la composition contient un système de réticulation. Avantageusement, selon l'invention, lorsque le copolymère est un copolymère tribloc ou un copolymère peigne la composition ne contient pas de système de réticulation.

La composition de caoutchouc peut comprendre d'autres additifs, en particulier, selon l'invention, une charge renforçante.

La charge renforçante peut comprendre, selon l'invention, un noir de carbone et/ou une charge inorganique

renforçante, en particulier une silice.

De par la présence du copolymère précédemment décrit dans la composition, des propriétés satisfaisantes de rigidité peuvent être obtenues alors même que l'on diminue la teneur en charge renforçante.

La composition de caoutchouc peut également, selon l'invention, comprendre un agent de couplage.

La composition de caoutchouc peut comprendre, selon l'invention, un plastifiant, une résine plastifiante ou leurs mélanges.

Avantageusement, selon l'invention, ledit élément constitutif du pneumatique est une bande de roulement.

## I- DESCRIPTION DETAILLEE DE L'INVENTION

### I-1. Copolymère élastomère diénique /polylactide

Dans le copolymère élastomère diénique /polylactide, le pourcentage massique en polylactide est compris entre 10 % et 50 % en poids, avantageusement entre 10 % et 45 % en poids, plus avantageusement jusqu'à 40 % en poids, encore plus avantageusement de 15 % à 40 % en poids. Les copolymères selon l'invention présentent des propriétés d'un élastomère thermoplastique, à savoir des propriétés élastiques et une capacité de fondre et durcir, de manière réversible, sous l'action de la chaleur, des blocs rigides.

On a constaté que lorsque le pourcentage massique en polylactide dans le copolymère est supérieur à 50% en poids, voire supérieur à 45% en poids, le copolymère obtenu ne présente plus de caractère élastomérique.

Dans un premier mode de réalisation de l'invention, le copolymère élastomère diénique / polylactide est un tribloc de structure PLA-élastomère diénique-PLA, de masse molaire moyenne en nombre, Mn, allant de 50 000 g/mol à 300 000 g/mol.

Dans un deuxième mode de réalisation de l'invention, le copolymère élastomère diénique / polylactide est un copolymère peigne ayant un tronc élastomère diénique et des blocs PLA pendants répartis le long du tronc, avantageusement de masse molaire moyenne en nombre, Mn, allant de 100 000 g/mol à 600 000 g/mol.

Dans un troisième mode de réalisation de l'invention, le copolymère élastomère diénique / polylactide est un di-bloc de structure PLA-élastomère diénique, avantageusement de masse molaire moyenne en nombre, Mn, allant de 50000 g/mol à 200000 g/mol.

Dans l'un ou l'autre de ces modes de réalisation, la température de fusion du bloc PLA varie avantageusement de 100°C à 230°C, plus avantageusement de 150°C à 210°C.

Ces copolymères supportent de grandes déformations avant rupture mais peuvent s'écouler à une température supérieure à la température de fusion du ou des blocs PLA.

En particulier, ces copolymères présentent un allongement à la rupture supérieur à 100%, avantageusement d'au moins 150%, plus avantageusement d'au moins 200%, encore plus avantageusement d'au moins 300%, tel que mesuré par la méthode décrite avant les exemples, paragraphe « tests mécaniques ».

Lorsqu'on étudie par analyse mécanique dynamique ces copolymères, on observe la présence d'un plateau caoutchoutique sur un domaine de température large, allant de la température de transition vitreuse du bloc élastomère à la température de fusion du bloc polyamide, par exemple allant de -20°C à 90°C pour les copolymères exemplifiés.

### Elastomère diénique, avant copolymérisation :

Par élastomère diénique, doit être compris selon l'invention tout polymère issu au moins en partie (i.e., un homopolymère ou un copolymère) de monomères diènes (monomères porteurs de deux doubles liaisons carbone-carbone, conjuguées ou non). On entend plus particulièrement par élastomère diénique susceptible d'être utilisé dans l'invention, un élastomère diénique correspondant à l'une des catégories suivantes:

(a) tout homopolymère obtenu par polymérisation d'un monomère diène conjugué ayant de 4 à 12 atomes de carbone;
(b) tout copolymère obtenu par copolymérisation d'un ou plusieurs des diènes conjugués ayant de 4 à 12 atomes de carbone, tel que ceux cités plus bas, entre eux ou avec un ou plusieurs monomères éthyléniquement insaturés;
(c) tout homopolymère obtenu par polymérisation d'un monomère diène non conjugué ayant de 5 à 12 atomes de carbone;
(d) tout copolymère obtenu par copolymérisation d'un ou plusieurs des diènes non conjugués ayant de 5 à 12 atomes de carbone, tels que ceux cités plus bas, entre eux ou avec un ou plusieurs monomères éthyléniquement insaturés;
(e) le caoutchouc naturel;
(f) un mélange de plusieurs des élastomères définis en (a) à (f) entre eux.

A titre de monomère diène conjugué approprié pour la synthèse des élastomères, on peut citer le butadiène-1,3 (ci-après désigné butadiène), le 2-méthyl-1,3-butadiène, les 2,3-di(alkyle en C1 - C5)- 1,3-butadiènes tels que par

exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de monomère diène non conjugué approprié pour la synthèse élastomères, on peut citer le pentadiène-1,4, l'hexadiène-1,4, l'éthylidène norbornène, le dicyclopentadiène.

A titre de monomères éthyléniquement insaturés susceptibles d'intervenir dans la copolymérisation avec un ou plusieurs monomères diéniques, conjugués ou non, pour synthétiser les élastomères, on peut citer:

- les composés vinylaromatiques ayant de 8 à 20 atomes de carbone, comme par exemple le styrène, l'ortho-, méta-, para-méthylstyrène, le mélange commercial vinylmésitylène, le divinylbenzène, le vinylnaphtalène;
- les monooléfines (non aromatiques) comme par exemple l'éthylène et les alpha-oléfines, notamment le propylène, l'isobutène ;
- le (méth)acrylonitrile, les esters (méth)acryliques.

Parmi ceux-ci, le ou les polymères diéniques utilisés dans l'invention sont tout particulièrement choisis dans le groupe des polymères diéniques constitué par les polybutadiènes (en abrégé "BR"), les polyisoprènes (IR) de synthèse, le caoutchouc naturel (NR), les copolymères de butadiène, les copolymères d'isoprène, les copolymères d'éthylène et de diène et les mélanges de ces polymères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les caoutchoucs butyls halogénés ou non, et les copolymères d'éthylène et de butadiène (EBR).

Synthèse du copolymère élastomère diénique /polylactide

Ces copolymères peuvent être préparés par extrusion réactive.

Les copolymères sont en particuliers ceux obtenus par le procédé décrit ci-après.

Dans ce procédé, on introduit dans une extrudeuse :

- du lactide ;
- un élastomère fonctionnalisé par au moins un groupement portant au moins une fonction apte à initier une polymérisation par ouverture de cycle du lactide ; et
- un système catalytique.

L'élastomère diénique a avantageusement une masse molaire moyenne en nombre, Mn, supérieure ou égale à 40 000 g/mol.

Dans un premier mode de réalisation de l'invention, l'élastomère diénique est fonctionnalisé par deux groupements terminaux, chaque groupement portant au moins une fonction apte à initier une polymérisation par ouverture de cycle du lactide. Le copolymère élastomère diénique /polylactide qui sera ainsi obtenu avec deux groupements terminaux portant une fonction apte à initier une polymérisation par ouverture de cycle du lactide sera un tri-bloc PLA-élastomère diénique-PLA.

La masse molaire moyenne en nombre, Mn, de l'élastomère diénique varie avantageusement de 40 000 g/mol à 250 000 g/mol, avantageusement entre 40 000 g/mol et 250 000 g/mol, encore plus avantageusement de 50 000 g/mol à 200 000 g/mol.

Dans un deuxième mode de réalisation de l'invention, l'élastomère diénique est fonctionnalisé par plusieurs groupements pendants répartis le long du tronc, chaque groupement portant au moins une fonction apte à initier une polymérisation par ouverture de cycle du lactide.

Le copolymère élastomère diénique /polylactide qui sera ainsi obtenu avec plusieurs groupements pendants portant une fonction apte à initier une polymérisation par ouverture de cycle du lactide sera un copolymère peigne ayant un tronc élastomère diénique et des blocs PLA pendants.

La masse molaire moyenne en nombre, Mn, de l'élastomère diénique varie avantageusement de 100 000 g/mol à 500 000 g/mol.

Dans un troisième mode de réalisation de l'invention, l'élastomère diénique est fonctionnalisé par un groupement terminal, portant au moins une fonction apte à initier une polymérisation par ouverture de cycle du lactide. Le copolymère élastomère diénique / polylactide qui sera ainsi obtenu avec un groupement terminal portant une fonction apte à initier une polymérisation par ouverture de cycle du lactide sera un di-bloc PLA-élastomère diénique.

La masse molaire moyenne en nombre, Mn, de l'élastomère diénique varie avantageusement de 25000 g/mol à 150000 g/mol, avantageusement de plus de 40000 g/mol à 150000 g/mol.

Des fonctions aptes à initier une polymérisation par ouverture de cycle du lactide sont plus particulièrement des fonctions hydroxyle -OH ou amine primaire $-NH_2$.

Les élastomères diéniques fonctionnalisés par un ou deux groupement(s) terminal(aux) (premier et troisième modes de réalisation de l'invention), peuvent être préparés par différents procédés connus de l'homme du métier, en particulier par amorçage fonctionnel, par réaction de terminaison avec un agent de fonctionnalisation ou par couplage. Un procédé de préparation d'un élastomère diénique fonctionnalisé par un ou deux groupement(s) terminal(aux) amine est par exemple décrit dans la publication Schulz et al., Journal of Polymer Science, vol. 15, 2401-2410 (1977).

L'élastomère diénique fonctionnalisé par plusieurs groupements pendants (deuxième mode de réalisation de l'invention) peut être préparé par différents procédés connus de l'homme du métier, en particulier par greffage. L'élastomère diénique fonctionnalisé par des groupements nucléophiles le long de la chaîne principale peut être fonctionnalisé lors d'une étape de fonctionnalisation de la chaîne principale de l'élastomère par différentes techniques, par exemple par réaction radicalaire, par hydrosilylation, par oxydation de l'insaturation suivi d'une hydrogénation. Cette fonctionnalisation permet d'obtenir un polymère fonctionnalisé par des groupements nucléophiles, avantageusement amine primaire ou alcool.

En particulier, l'élastomère diénique peut être fonctionnalisé par réaction radicalaire selon le procédé décrit dans la demande WO 2014/095925.

Au cours de l'extrusion réactive, le lactide réagit avec la(les) fonction(s) portée(s) par le groupement de l'élastomère fonctionnalisé puis le lactide polymérise, par ouverture de cycle, pour former un ou plusieurs bloc(s) polylactide (PLA).

Comme décrit précédemment, les groupements peuvent être pendants le long du tronc ou terminaux. Ce procédé permet ainsi une polymérisation maîtrisée, par croissance d'une chaîne PLA à partir de chaque fonction amorceur portée par chaque groupement, pendant ou terminal, de l'élastomère diénique. Dans ledit groupement, la fonction apte à initier une polymérisation par ouverture de cycle du lactide, encore appelée fonction amorceur, est avantageusement terminale.

Avantageusement, l'élastomère est fonctionnalisé par au moins deux groupements, identiques ou différents, portant chacun au moins une fonction apte à initier une polymérisation par ouverture de cycle du lactide, conduisant ainsi à des copolymères élastomère diénique / polylactide tri-blocs ou peignes.

L'élastomère diénique fonctionnalisé par au moins deux groupements peut notamment être représenté par les formules suivantes :

(I) 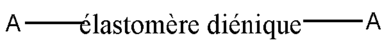


(II) 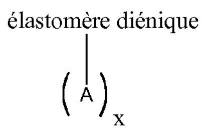

, avec x>2

Dans ces deux formules (I), (II), le groupement A est un groupement portant au moins une fonction apte à initier une polymérisation par ouverture de cycle du lactide. Le groupement A peut être différent au sein d'une même formule et d'une formule (I) à une formule (II).

Comme exposé précédemment, les élastomères de formule (I) conduiront à des tri-blocs alors que les élastomères de formule (II) conduiront à des copolymères peignes.

Avantageusement, le procédé comprend les étapes successives suivantes :

a. Introduction dans une extrudeuse du lactide et dudit élastomère fonctionnalisé ;
b. Mélange des composants introduits à l'étape a) ; puis
c. Introduction du système catalytique au mélange obtenu suite à l'étape b), l'introduction du système catalytique déclenchant la polymérisation ; puis
d. Introduction d'un inhibiteur de catalyseur pour stopper la polymérisation ;
e. Récupération du copolymère élastomère diénique / polylactide en sortie de l'extrudeuse.

Les étapes a) et b) permettent d'homogénéiser le mélange et d'assurer que la polymérisation subséquente se déroule de manière optimale. Avantageusement, lors de l'étape a), on introduit la totalité de l'élastomère fonctionnalisé.

Le lactide étant sensible à l'eau et à l'humidité, l'élastomère fonctionnalisé est avantageusement préalablement séché. Avantageusement, la teneur en eau résiduelle dans l'élastomère diénique est inférieure à 2000 ppm, plus avantageusement inférieure à 1000 ppm. Avantageusement, la teneur en eau résiduelle dans le lactide est inférieure à 500 ppm, plus avantageusement inférieure à 300 ppm.

En outre, les étapes a) et b) sont avantageusement conduites dans des conditions anhydres, par exemple

sous balayage d'un gaz inerte tel que l'azote, afin d'éviter toute homopolymérisation du lactide.

Lors de l'étape a), on peut introduire la totalité du lactide ou une partie de lactide.

Dans un premier mode de réalisation, lors de l'étape a), on introduit la totalité du lactide.

Dans un deuxième mode de réalisation, lors de l'étape a), on introduit une partie du lactide, avantageusement au moins 50% en poids, par rapport à la quantité totale de lactide, plus avantageusement au moins 70% en poids (% en poids par rapport au poids total du lactide).

La partie restant du lactide sera ajoutée lors de l'étape c), précédemment ou simultanément à l'introduction du système catalytique.

Avantageusement, le procédé comprend les étapes successives suivantes :

a. Introduction dans une extrudeuse d'une partie du lactide et dudit élastomère fonctionnalisé ;
b. Mélange des composants introduits à l'étape a) ; puis
c. Introduction de la partie restante du lactide et du système catalytique au mélange obtenu suite à l'étape b), l'introduction du système catalytique déclenchant la polymérisation ; puis
d. Introduction d'un inhibiteur de catalyseur pour stopper la polymérisation ;
e. Récupération du copolymère élastomère diénique / polylactide en sortie de l'extrudeuse.

La polymérisation du lactide débute lors de l'ajout du système catalytique. On comprend bien entendu que le système catalytique comprend un catalyseur permettant la polymérisation par ouverture de cycle du lactide, catalyseur qui sera décrit par la suite.

La polymérisation est avantageusement conduite à une température allant de 80°C à 200°C, plus avantageusement allant de 100°C à 200°C, encore plus avantageusement allant de 150°C à 200°C. Le procédé se caractérise en ce que la polymérisation est conduite dans une extrudeuse. Tout type d'extrudeuse permettant le mélange de composants peut être utilisé : extrudeuse monovis, à deux étages ou co-malaxeur (en anglais : co-kneader), bi-vis, à engrenage planétaire, à anneaux. Les extrudeuses bi-vis sont particulièrement adaptées. L'extrudeuse peut permettre un procédé continu ou discontinu.

Pour un type de procédé, continu ou discontinu, le rapport L/D (longueur/diamètre) de l'extrudeuse est adapté en fonction du temps de polymérisation, dépendant du débit et du temps de séjour. Dans un procédé continu, le rapport L/D peut par exemple être supérieur à 20, plus avantageusement supérieur à 40. Il peut par exemple être de 56 pour une extrudeuse bi-vis continue et un temps de polymérisation inférieur à 30 minutes. Dans un procédé discontinu, il peut par exemple être de 5 ou 6 pour une micro-extrudeuse et un temps de polymérisation inférieur à 30 minutes.

Dans le mode de réalisation avantageux mettant en œuvre les étapes a) à e), ces étapes a) à e) sont avantageusement conduites dans une seule et même extrudeuse, principalement pour des raisons pratiques. Toutefois, on pourrait envisager d'utiliser une extrudeuse pour les étapes a) et b) et une autre extrudeuse pour les étapes c) à e).

Le mélange de l'étape a) est avantageusement conduit sous un mélangeage plus faible que le mélange de l'étape c) de polymérisation, notamment pour ne pas dégrader l'élastomère diénique fonctionnalisé lors de l'étape a). L'homme du métier sait adapter la vitesse de rotations des vis de l'extrudeuse, son design dans les zones de mélange en fonction du mélangeage qu'il souhaite obtenir.

Un inhibiteur du système catalytique est introduit lors de l'étape d), bien entendu après mélange à l'étape précédente pendant un temps suffisant pour atteindre le degré de polymérisation recherché.

Lors de l'étape e), avant récupération en sortie du copolymère, le procédé peut comprendre une étape d'évaporation des composants volatils n'ayant pas réagi, en particulier du lactide qui n'aurait pas réagi.

Le procédé permet d'obtenir des conversions satisfaisantes en des durées compatibles avec un usage industriel. En particulier, le temps de polymérisation est avantageusement inférieur à 30 minutes, plus avantageusement il varie de 5 minutes à moins de 30 minutes.

Dans le procédé, on peut également introduire, avantageusement dès l'étape a), un agent antioxydant qui permet d'éviter une dégradation de l'élastomère diénique. Cet agent antioxydant peut également permettre d'éviter une dépolymérisation des blocs PLA ou des couplages entre les chaînes de copolymères élastomère diénique / polylactide formés. L'agent antioxydant est décrit par la suite.

La polymérisation est avantageusement conduite en masse, c'est-à-dire sans ajout de solvant supplémentaire. Le procédé peut être continu ou discontinu.

Dans un premier mode de réalisation, le procédé est continu. Les étapes a) à e) seront donc simultanées et auront lieu dans des zones différentes de l'extrudeuse. Par exemple, l'étape a) sera conduite dans une zone d'alimentation (située en amont dans l'extrudeuse), puis l'étape b) dans une zone de mélange. Encore plus en aval, l'extrudeuse comprendra une zone d'introduction du système catalytique puis une zone de mélange. Encore plus en aval, l'extrudeuse comprendra une zone d'introduction de l'inhibiteur du système catalytique, mélangeage, puis d'évaporation des produits volatils n'ayant pas réagi avec sortie et récupération du copolymère.

Il est entendu que l'amont se situe en tête d'extrudeuse (zone d'alimentation). Par rapport à un point de

référence, une zone en aval est une zone plus près de la sortie de l'extrudeuse.

Un exemple de réalisation d'un procédé de synthèse en continu d'un copolymère, par exemple un copolymère styrène-butadiène (SBR) / PLA, est représenté sur la figure 1. Dans une extrudeuse bi-vis A comprenant 15 zones de mélanges (Z1 à Z15, ayant la température de consigne indiquée), ayant un rapport L/D de 56, on introduit le lactide 1 (40% en masse par rapport au poids total lactide + SBR di-fonctionnalisé) sous atmosphère d'azote à un débit adapté, par exemple de 400 g/h, dans la zone Z1, puis, dans la zone Z2, un élastomère di-fonctionnalisé, par exemple un SBR di-fonctionnalisé amine primaire aromatique, ayant une masse molaire en nombre de 87300 g/mol, sous atmosphère d'azote à un débit adapté, par exemple de 600 g/h. Le lactide et l'élastomère fonctionnalisé sont mélangés pendant un temps suffisant, par exemple de 2,1 minutes. Dans la zone Z4, on ajoute le système catalytique 3 sous forme de solution à un débit adapté, par exemple de 0,136 ml/min. Le système catalytique peut par exemple être un mélange 1/1 mol/mol de $Sn(oct)_2$ et de $P(Ph_3)$ et le ratio molaire lactide/ $Sn(oct)_2$ est par exemple de 700. La polymérisation commence à cet instant. En zone Z8, on introduit un inhibiteur du catalyseur 4 pour stopper la polymérisation. Des zones Z10 à Z12, on évapore sous vide le lactide n'ayant pas réagi. La vitesse de rotation des vis est par exemple de 70 tours/min. Dans le mode de réalisation exemplifié, le débit total est de 1000 g/h. En sortie d'extrudeuse, l'extrudat est envoyé vers un banc de refroidissement B puis vers un granulateur C. Le copolymère obtenu a une structure tri-bloc linéaire avec un bloc élastomère central de 87300g/mol lié à deux blocs latéraux de PLA de masse molaire environ 10 000g/mol, soit une masse molaire du tri-bloc d'environ 110 000 g/mol. La conversion du lactide en PLA est supérieure à 90% et la majorité du lactide résiduel est éliminé lors de l'étape e).

Dans un deuxième mode de réalisation, le procédé est discontinu. Les étapes a) à e) seront donc étalées dans le temps et pourront avoir lieu dans une même zone de l'extrudeuse.

Les étapes a) à e) peuvent ainsi être conduites en cycles, le produit sortant de la zone d'extrusion étant renvoyé en alimentation de l'extrudeuse. L'étape a) correspond au début du premier cycle. Puis l'étape b) est conduite pendant un nombre de cycles prédéterminé. Lors de l'étape c), on introduit le système catalytique puis on conduit le nombre de cycles pré- déterminé. Lors de l'étape d), on introduit l'inhibiteur du système catalytique puis on conduit le nombre de cycles prédéterminé pour évaporer les produits n'ayant pas réagi avant sortie et récupération du copolymère.

Pour atteindre les ratios en polylactide souhaités dans le copolymère, le pourcentage massique en lactide introduit varie avantageusement de 12 % à 55 % en poids, plus avantageusement de 12% à 47% en poids, par rapport au poids total d'élastomère diénique fonctionnalisé introduit et de lactide introduit.

<u>Système catalytique :</u>

La réaction de polymérisation du lactide par ouverture de cycle se conduit en présence d'un système catalytique, tel que cela est connu de l'homme du métier.

Un premier exemple de système catalytique adapté est celui décrit dans la demande de brevet WO98/02480.

Ce système catalytique comprend au moins un catalyseur et optionnellement au moins un cocatalyseur.

De préférence le catalyseur est de formule (M) ($X^1$, $X^2$....$X^m$)$_n$ dans laquelle

M est un métal sélectionné parmi les métaux du groupe 2, 4, 8, 9, 10, 12, 13, 14 et 15 du tableau périodique des éléments ;

$X^1$, $X^2$....$X^m$ est un substituant sélectionné parmi les groupes alkyle, aryle, oxyde, carboxylate, halogénure, alcoxy, ester d'alkyle ;

m est un nombre entier compris entre 1 et 6, et

n est un nombre entier compris entre 1 et 6, les valeurs de m et n dépendent du degré d'oxydation de l'ion métallique.

« alkyle » désigne un groupe hydrocarboné linéaire, ou ramifié, saturé, de 1 à 20 atomes de carbone, en particulier de 1 à 16 atomes de carbone, en particulier de 1 à 12 atomes de carbone, en particulier de 1 à 10 atomes et plus particulièrement de 1 à 6 atomes de carbone. A titre d'exemple, sont inclus dans cette définition des radicaux tels que méthyle, éthyle, isopropyle, n-butyle, t-butyle, t-butylméthyle, n-propyle, pentyle, n- hexyle, 2-éthylbutyle, heptyle, octyle, nonyle, ou décyle.

« aryle » désigne un cycle aromatique comprenant de 1 à 3 noyaux aromatiques, éventuellement fusionnés, de 6 à 20 atomes de carbone, notamment de 6 à 10 atomes de carbone. A titre d'exemple de groupes aryle il est possible de mentionner le phényle, le phenétyle, le naphtyle ou le anthryle.

« alcoxy » désigne un groupe de formule générale R-O- où R est un groupe alkyle tel que défini ci-dessus. On peut citer, à titre d'exemple, les groupes méthoxy, éthoxy, propoxy, t-butoxy, n-butoxy, isobutoxy, sec-butoxy, n-pentoxy, isopentoxy, sec-pentoxy, t-pentoxy, hexyloxy, isopropoxy.

« halogénure » désigne un chlorure, un fluorure, un iodure ou un bromure.

Dans le groupe 2 l'utilisation de Mg et Ca sont préférés. Dans le groupe 4, l'utilisation de Ti, Zr et Hf peuvent être mentionnés. Au sein du groupe 8 l'utilisation du Fe est préférée. Au sein du groupe 12 l'utilisation de Zn est préférée. Au sein du groupe 13 l'utilisation de Al, Ga, In et Tl peuvent être mentionnés. Au sein du groupe 14 l'utilisation de Sn est préférée. Au sein du groupe 15 l'utilisation de Sb et Bi est préférée. D'une manière générale, l'utilisation de métaux des Groupes 4, 14 et 15 est préférée. Il est préférable que M soit choisi parmi Sn, Zr, Hf, Zn, Bi et Ti. L'utilisation d'un

catalyseur à base de Sn peut être particulièrement préférée.

Pour les halogénures, les halogénures d'étain tels que $SnCl_2$, $SnBr_2$, SnCl et $SnBr_4$ peuvent être mentionnés. Pour les oxydes SnO et PbO peuvent être mentionnés. Dans le groupe des esters d'alkyle, les octoates (par exemple, 2-éthyl hexanoate), les stéarates, les acétates peuvent être mentionnés. En particulier, le Sn-octanoate, (également connu sous le nom de Sn (II) bis 2-éthylhexanoate ou simplement comme l'octoate d'étain), l'étain stéarate, le diacétate de dibutylétain, le butylétain tris (2-éthylhexanoate), l'étain (2-éthylhexanoate), le bismuth (2-éthylhexanoate), l'étain tri-acétate, le sodium (2-éthyle hexanoate), le stéarate de calcium, le stéarate de magnésium et le stéarate de zinc peuvent être mentionnés. On peut également citer $Ti(OiPr)_4$, $Ti(2\text{-éthylhexanoate})_4$, $Ti(2\text{-éthylhexylate})_4$, $Zr(OiPr)_4$, $Bi(\text{néodécanoate})_3$ ou $Zn(lactate)_2$. D'autres composés appropriés comprennent le tétraphénylétain, le Sb tris (éthylène glycolate), les alkoxy d'aluminium et les alkoxy de zinc.

Le système catalytique peut également comprendre un co-catalyseur, avantageusement de formule

$$(Y)(R_1, R_2 \dots R_q)_p$$

Où

Y est un élément sélectionné parmi les éléments du groupe 15 et/ou 16 du tableau périodique,
$R_1$, $R_2$... $R_q$ est un substituant sélectionné parmi le groupe comportant les alkyles, les aryles, les oxydes, les halogènures, les alcoxy, les aminoalkyles, les thioalkyles, les phényloxy, les aminoaryles, les thioaryles, et des composés contenant les éléments du groupe 15 et/ou 16 du tableau périodique
q est un nombre entier compris entre 1 et 6, et
p est un nombre entier compris entre 1 et 6.

Préférentiellement, le système catalytique comprend le bis(2-éthylhexanoate) d'étain comme catalyseur et la triphénylphosphine $PPh_3$ comme co-catalyseur. Le rapport molaire entre le co-catalyseur et le catalyseur peut être compris entre 1/10 et 10/1, préférentiellement entre 1/3 et 3/1. Plus préférentiellement, le rapport molaire entre le co-catalyseur et le catalyseur peut être 1/1.

Le rapport molaire entre le lactide et le catalyseur peut être inférieur à 1000/1, en particulier inférieur à 900/1.

Le rapport molaire entre le lactide et le catalyseur bis(2-éthylhexanoate) d'étain peut aller de 50/1 à 1000/1, préférentiellement de 100/1 à 900/1, plus préférentiellement de 200/1 à 800/1. Lorsqu'un autre catalyseur est utilisé, l'homme du métier sait en adapter les quantités et la température pour respecter la même activité catalytique.

D'autres systèmes catalytiques peuvent également être utilisés et on pourra notamment se référer à l'article Kamber et al. (Organocatalytic ring-opening polymerization, Nahrain E. Kamber et al., Chem. Rev. 2007, 107,5813-5840).

On pourra également citer les catalyseurs organiques de la famille des guanidines, plus particulièrement de la TBD : 1,5,7-triazabicyclo[4.4.0]déc-5-ène) (Cyclic guanidine organic catalysts ; what is magie about triazabicyclodecene ?, Matthew K. Kiesewetter et al., J. Org. Chem., 2009, 74, 6490-9496) ou les oléfines N-hétérocycliques (Highly polarised alkenes as organocatalysts for the polymerization of lactones and trimethylene carbonate, stefen naumann et al., ACS Macro Lett., 2016, 5, 134-138).

Agent antioxydant et inhibiteur de polymérisation :

Dans le procédé, on peut ajouter dès l'étape a) un agent antioxydant.

Cet agent antioxydant est de préférence peu nucléophile pour ne pas amorcer la polymérisation par ouverture de cycle du lactide.

Des agents antioxydants du PLA sont notamment décrits dans les brevets US 6,143,863 ou EP 912,624.

Les organophosphites tels que le bis (2,4-di-t-butylphenyl) pentraerythritol diphosphite (nom commercial : Ultranox® 626) sont particulièrement efficaces.

Les antioxydants phénoliques encombrés tels que l'Irganox® 1070 sont également particulièrement efficaces.

L'inhibiteur de polymérisation (cata-killer) ajouté lors de l'étape d) du procédé peut également avoir un effet antioxydant.

Les inhibiteurs du système catalytique utilisé dans le procédé sont connus de l'homme du métier. On pourra par exemple se référer aux brevets US 6,114,495 ou EP 912,624. On peut notamment citer les produits commerciaux suivants : l'Irganox® 1425 ou l'Irganox® 195, qui sont tous deux des phosphonates, le doverphos® S680 ou le doverphos® LP09, qui sont tous deux des phosphites, l'acide polyacrylique, l'acide tartrique.

Enfin, l'élastomère fonctionnalisé introduit pourra comprendre un agent antioxydant qui a été ajouté en fin de synthèse de l'élastomère fonctionnalisé.

L'antioxydant ajouté en fin de synthèse de l'élastomère fonctionnalisé est tout antioxydant connu pour être efficace en empêchant le vieillissement des élastomères attribuable à l'action de l'oxygène.

On peut citer notamment les dérivés de la para-phénylène diamine (en abrégé "PPD" ou "PPDA"), encore dénommés de manière connue para-phénylène diamines substituées, tels que par exemple la N-1,3-diméthylbutyl-N'-phényl-p-phénylène-diamine (plus connue sous le terme abrégé "6-PPD"), la N-isopropyl-N'-phényl-p-phénylènediamine (en abrégé "I-PPD"), la phényl-cyclohexyl-p-phénylène-diamine, la N,N'-di(1,4-diméthyl-pentyl)-p-phénylène-diamine, la N,N'-diaryl-p-phénylène diamine ("DTPD"), la diaryl-p-phénylène-diamine ("DAPD"), la 2,4,6-tris-(N-1,4-dimethylpentyl-p-phenylenediamino)-1,3,5-triazine, et les mélanges de telles diamines.

On peut également citer des diphénylamines ou triphénylamines substituées, telles que décrites par exemple dans les demandes WO 2007/121936, WO 2008/055683 et WO2009/138460, en particulier la 4,4'-bis(isopropylamino)-triphénylamine, la 4,4'-bis(1,3-diméthylbutylamino)-triphénylamine, la 4,4'-bis(1,4-diméthylpentylamino)-triphénylamine, la 4,4',4"-tris(1,3-diméthylbutylamino)-triphénylamine, la 4,4',4"-tris(1,4-diméthylpentylamino)-triphénylamine.

On peut également citer des dialkylthiodipropionates ou encore des antioxydants phénoliques, notamment de la famille des 2,2'-méthylène-bis-[4-alkyle($C_1$-$C_{10}$)-6-alkyle($C_1$-$C_{12}$)phénols, tels que décrits notamment dans la demande WO 99/02590.

Bien entendu, dans la présente description, le terme antioxydant peut désigner à la fois un composé antioxydant unique ou un mélange de plusieurs composés antioxydants.

De préférence, l'antioxydant est choisi dans le groupe constitué par les p-phénylène diamines substituées, les diphénylamines substituées, les triphénylamines substituées, et les mélanges de tels composés ; plus préférentiellement encore, l'antioxydant est choisi dans le groupe constitué par les p-phénylène diamines substituées et les mélanges de telles diamines.

I-2. Autres composants de la composition

Selon l'invention la composition comprend au moins 65% en poids du copolymère tel que précédemment décrit.

La composition est une composition de caoutchouc utilisable dans la fabrication d'un pneumatique. Le copolymère précédemment décrit est particulièrement utile pour la préparation de compositions pour bande de roulement. Le copolymère précédemment décrit permet de fabriquer une bande de roulement permettant d'obtenir un très bon compromis des performances en adhérence et en résistance au roulement.

Le copolymère précédemment décrit représente au moins 65%, de préférence au moins 70% en poids, plus préférentiellement au moins 75% en poids de l'ensemble des élastomères présents dans la composition élastomère. De manière préférentielle également, le copolymère précédemment décrit représente au moins 95% (en particulier 100%) en poids de l'ensemble des élastomères présents dans la composition.

Ainsi, selon l'invention, la quantité de copolymère précédemment décrit est comprise dans un domaine qui varie de 65 à 100 pce, préférentiellement de 70 à 100 pce et notamment de 75 à 100 pce. De manière préférentielle également, la composition contient de 95 à 100 pce de copolymère précédemment décrit. Le copolymère précédemment décrit est préférentiellement le ou les seuls élastomères de la composition de caoutchouc, en particulier de la bande de roulement.

On comprendra bien entendu que par l'expression « copolymère précédemment décrit », on entend désigner aussi bien un copolymère répondant à la description qui précède qu'un mélange de tels copolymères.

Le copolymère précédemment décrit est suffisant à lui seul pour que soit utilisable la bande de roulement selon l'invention.

La composition, peut comporter en outre au moins un (c'est-à-dire un ou plusieurs) caoutchouc diénique à titre d'élastomère non thermoplastique.

Selon l'invention, le taux total de caoutchouc diénique additionnel est compris dans un domaine variant de 0 à 35 pce, préférentiellement de 0 à 30 pce, plus préférentiellement de 0 à 25 pce, et plus préférentiellement encore de 0 à 5 pce. De manière très préférentielle également, la composition ne contient pas de caoutchouc diénique additionnel.

Par élastomère ou caoutchouc « diénique », doit être compris de manière connue un (on entend un ou plusieurs) élastomère issu au moins en partie (i.e. ; un homopolymère ou un copolymère) de monomères diènes (monomères porteurs de deux doubles liaisons carbone carbone, conjuguées ou non).

Par élastomère diénique, doit être compris selon l'invention tout élastomère synthétique issu au moins en partie de monomères diènes. Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques. A titre de diènes conjugués utilisables dans le procédé conforme à l'invention conviennent notamment le butadiène-1,3, le 2-méthyl-1,3-butadiène, les 2,3 di(alcoyle en C1 à C5)-1,3-butadiène tels que par exemple le 2,3-diméthyl-1,3-butadiène, 2,3-diéthyl-1,3-butadiène, 2- méthyl-3-éthyl-1,3-butadiène, le 2-méthyl-3-isopropyl-1,3-butadiène, le phényl-1,3-butadiène, le 1,3-pentadiène, le 2,4 hexadiène, etc... L'élastomère diénique de la composition est choisi préférentiellement dans le groupe des élastomères diéniques constitué par

les polybutadiènes, les polyisoprènes de synthèse, le caoutchouc naturel, les copolymères de butadiène, les copolymères d'isoprène et les mélanges de ces élastomères. De tels copolymères sont plus préférentiellement choisis dans le groupe constitué par les copolymères du styrène (SBR, SIR et SBIR), les polybutadiènes (BR) et le caoutchouc naturel (NR).

La masse molaire moyenne en nombre, Mn, de l'élastomère diénique optionnel peut largement varier, par exemple de 2 000 g/mol à 1000 000 g/mol.

Charge nanométrique ou renforçante

Le copolymère précédemment décrit est suffisant à lui seul pour que soit utilisable la composition, en particulier la bande de roulement.

Lorsqu'une charge renforçante est utilisée, on peut utiliser tout type de charge habituellement utilisée pour la fabrication de pneumatiques, par exemple une charge organique telle que du noir de carbone, une charge inorganique telle que de la silice, ou encore un coupage de ces deux types de charge, notamment un coupage de noir de carbone et de silice.

De par la présence du copolymère de l'invention dans la composition de caoutchouc, des propriétés satisfaisantes de rigidité peuvent être obtenues alors même que l'on diminue la teneur en charge renforçante.

Pour coupler la charge inorganique renforçante à l'élastomère, on peut par exemple utiliser un agent de couplage (ou agent de liaison) au moins bifonctionnel destiné à assurer une connexion suffisante, de nature chimique et/ou physique, entre la charge inorganique (surface de ses particules) et l'élastomère précédemment décrit, en particulier des organosilanes ou des polyorganosiloxanes bifonctionnels.

Plastifiants

Le copolymère précédemment décrit est suffisant à lui seul pour que soit utilisable la composition, en particulier la bande de roulement.

Toutefois, selon un mode de réalisation préférentiel de l'invention, la composition peut en outre comporter également, un agent plastifiant, tel qu'une huile (ou huile plastifiante ou huile d'extension) ou une résine plastifiante dont la fonction est de faciliter la mise en œuvre de la bande de roulement, particulièrement son intégration au pneumatique par un abaissement du module et une augmentation du pouvoir tackifiant.

Plastifiant solide :

L'agent plastifiant solide est une résine plastifiante.

De manière connue de l'homme du métier, la dénomination "résine " est réservée dans la présente demande, par définition, à un composé thermoplastique qui est un solide à température ambiante (23°C), par opposition à un composé plastifiant liquide tel qu'une huile.

Les résines sont des polymères bien connus de l'homme du métier, utilisables en particulier comme agents plastifiants ou agents tackifiants dans des matrices polymériques. Elles sont par nature miscibles (i.e., compatibles) aux taux utilisés avec les compositions de polymères auxquelles elles sont destinées, de manière à agir comme de véritables agents diluants. Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods").* Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur Tg est de préférence supérieure à 0°C, notamment supérieure à 20°C (le plus souvent comprise entre 30°C et 95°C).

De manière connue, ces résines peuvent être qualifiées aussi de résines thermoplastiques en ce sens qu'elles se ramollissent par chauffage et peuvent ainsi être moulées. Elles peuvent se définir également par un point ou température de ramollissement (en anglais, *"softening point").*

Plastifiant liquide :

Le plastifiant est un agent plastifiant liquide (à 23°C) dont la fonction est de ramollir la matrice en diluant l'élastomère et la charge renforçante ; sa Tg est préférentiellement inférieure à -20°C, plus préférentiellement inférieure à -40°C.

Toute huile d'extension, qu'elle soit de nature aromatique ou non-aromatique, tout agent plastifiant liquide connu pour ses propriétés plastifiantes vis-à-vis d'élastomères diéniques, est utilisable. A température ambiante (23°C), ces plastifiants ou ces huiles, plus ou moins visqueux, sont des liquides (c'est-à-dire, pour rappel, des substances ayant

la capacité de prendre à terme la forme de leur contenant), par opposition notamment aux résines plastifiantes qui sont par nature solides à température ambiante.

Additifs divers

La composition peut en outre comporter par ailleurs les divers additifs usuellement présents dans les compositions pour pneumatiques, en particulier les bandes de roulements, connues de l'homme du métier. On choisira par exemple un ou plusieurs additifs choisis parmi les agents de protection tels que antioxydants ou antiozonants, anti-UV, les divers agents de mise en œuvre ou autres stabilisants, ou encore les promoteurs aptes à favoriser l'adhésion au reste de la structure de l'objet pneumatique. De manière préférentielle, la composition ne contient pas tous ces additifs en même temps et de manière encore plus préférentielle, la composition ne contient aucun de ces agents.

Dans une variante avantageuse de l'invention, on citera tout particulièrement des agents antioxydants, des agents de nucléation.

Selon l'invention, lorsque le copolymère précédemment décrit est un copolymère tri-bloc ou un copolymère peigne (premier et deuxième modes de réalisation), la composition peut ne pas contenir de système de réticulation. Préférentiellement, selon l'invention, la composition ne contient pas de système de réticulation.

Selon l'invention, lorsque le copolymère précédemment décrit est un copolymère di-bloc (troisième modes de réalisation), la composition contient un système de réticulation.

Le système de réticulation peut être un système de vulcanisation, il est préférentiellement à base de soufre ou de donneurs de soufre et d'accélérateur primaire de vulcanisation (préférentiellement 0,5 à 10,0 pce d'accélérateur primaire). A ce système de vulcanisation viennent optionnellement s'ajouter, divers accélérateurs secondaires ou activateurs de vulcanisation connus tels qu'oxyde de zinc (préférentiellement pour 0,5 à 10,0 pce), acide stéarique, dérivés guanidiques (en particulier diphénylguanidine), ou autres (préférentiellement pour 0,5 à 5,0 pce chacun). Le soufre est utilisé à un taux préférentiel compris entre 0,5 et 10 pce, plus préférentiellement compris entre 0,5 et 5,0 pce, par exemple entre 0,5 et 3,0 pce lorsque l'invention est appliquée à une bande de roulement de pneumatique.

La composition peut contenir une ou plusieurs charges micrométriques, inertes telles que les charges lamellaires connues de l'homme de l'art. De préférence, la composition ne contient pas de charge micrométrique.

Avantageusement, la composition comprend également des additifs, en particulier des agents antioxydant, des agents de nucléation, des charges ; tels que définis précédemment.

L'invention a pour objet un pneumatique dont un de ses éléments constitutifs comprend le copolymère précédemment décrit. Cet élément constitutif est avantageusement la bande de roulement.

Le copolymère permet de fabriquer une bande de roulement permettant d'obtenir un très bon compromis des performances en adhérence et en résistance au roulement. Cette bande de roulement peut-être montée sur un pneumatique de manière classique, ledit pneumatique comprenant en plus de la bande de roulement selon l'invention, un sommet, deux flancs et deux bourrelets, une armature de carcasse ancrée aux deux bourrelets, et une armature de sommet. Optionnellement, le pneumatique selon l'invention peut comprendre en outre une sous-couche ou une couche d'adhésion entre la portion sculptée de la bande de roulement et l'armature de sommet.

L'invention a en particulier pour objet un pneumatique comprenant une bande de roulement, un sommet avec une armature de sommet, deux flancs, deux bourrelets, une armature de carcasse ancrée aux deux bourrelets et s'étendant d'un flanc à l'autre, dans lequel la bande de roulement comprend au moins un élastomère thermoplastique, ledit élastomère thermoplastique étant un copolymère tel que précédemment décrit, et le taux total d'élastomère thermoplastique étant compris dans un domaine variant de 65 à 100 pce .

Préparation

Le copolymère précédemment décrit peut être mis en œuvre de façon classique pour des TPE, par extrusion ou moulage, par exemple à partir d'une matière première disponible sous la forme de billes ou de granulés.

La bande de roulement pour le pneumatique selon l'invention peut être préparée par incorporation des différents composants dans un mélangeur, puis utilisation d'une filière permettant de réaliser le profilé. La bande de roulement est ensuite sculptée dans le moule de cuisson du pneumatique. Les différents composants peuvent par exemple être le copolymère décrit précédemment, le cas échéant un caoutchouc diénique tel que décrit précédemment et le cas échéant un ou plusieurs des autres additifs décrits précédemment.

Le mélangeur peut par exemple être une extrudeuse bi-vis, de façon à réaliser la fusion de la matrice et une incorporation de tous les ingrédients.

Les caractéristiques précitées de la présente invention, ainsi que d'autres, seront mieux comprises à la lecture de la description suivante de plusieurs exemples de réalisation de l'invention, donnés à titre illustratif et non limitatif en relation avec les annexes jointes

II- EXEMPLES

Mesures et tests utilisés

1. Détermination de la distribution de masses molaires par SEC RI équivalent PS

Elle est déterminée par chromatographie d'exclusion stérique (SEC) en équivalent polystyrène. La SEC permet de séparer les macromolécules en solution suivant leur taille à travers des colonnes remplies d'un gel poreux. Les macromolécules sont séparées suivant leur volume hydrodynamique, les plus volumineuses étant éluées en premier. Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité ou polydispersité (Ip = Mw/Mn) calculé via un étalonnage dit de MOORE.
Préparation du polymère: Il n'y a pas de traitement particulier de l'échantillon de polymère avant analyse. Celui-ci est simplement solubilisé dans du chloroforme, à une concentration d'environ 2 g/l. Puis la solution est filtrée sur filtre de porosité 0,45$\mu$m avant injection.
Analyse SEC: L'appareillage utilisé est un chromatographe « Agilent 1200 ». Le solvant d'élution est du chloroforme. Le débit est de 1 ml/min, la température du système de 30°C et la durée d'analyse de 30 min. On utilise un jeu de trois colonnes Agilent en série précédées d'un filtre, de dénominations commerciales « PLgel 10 $\mu$m (précolonne)» et deux « PLgel 10 $\mu$m mixed B». Le volume injecté de la solution de l'échantillon de polymère est 100 $\mu$l. Le détecteur est un réfractomètre différentiel « Agilent 1200 » et le logiciel d'exploitation des données chromatographiques est le système «Chemstation». Les masses molaires moyennes calculées sont relatives à une courbe d'étalonnage réalisée à partir de polystyrènes étalons commerciaux « Agilent-KIT PS ».

2. Détermination de la composition des copolymères à blocs SBR/PLA par RMN

Les déterminations des taux de PLA dans les copolymères tribloc ou peigne et les microstructures des élastomères diéniques au sein du copolymère sont réalisées par une analyse RMN.
Les échantillons (environ 20mg) sont solubilisés dans 1mL de $CDCl_3$ et introduits dans un tube RMN de 5mm. Les spectres sont enregistrés sur un spectromètre Avance III HD 500 MHz Bruker équipé d'une sonde BBFO 1H-X 5mm Z_GRD. Les spectres sont calibrés sur le signal du $CDCl_3$ à 7.20ppm en $^1H$.
L'expérience RMN $^1H$ quantitative utilisée est une séquence simple impulsion avec un angle de basculement à 30° et un délai de recyclage de 5 secondes entre chaque acquisition. 64 accumulations sont enregistrées à température ambiante. Les spectres sont calibrés sur le signal du $CDCl_3$ à 7.20ppm en 1H.
On observe les signaux du SBR, ainsi que ceux du PLA, qui seront utilisés pour la quantification :

- CH du PLA à $\delta^1H$ = 5,1 ppm et $\delta^{13}C$ = 68,8 ppm
- *$CH_3$ du PLA à $\delta^1H$ = 1,51 ppm et $\delta^{13}C$ = 16,5 ppm*

Les échantillons partiellement solubles dans le $CDCl_3$ sont analysés par RMN avec rotation à l'angle magique HR-MAS (High Resolution - Magic Angle Spinning) en milieu gonflé dans le chloroforme deutéré. Les échantillons (environ 10mg d'élastomère) sont introduits dans un rotor de 92$\mu$L contenant du $CDCl_3$. Les spectres sont enregistrés sur un spectromètre Avance III HD 500 MHz BRUKER équipé d'une sonde dual 1H/13C HRMAS Z-GRD 4mm.
L'expérience RMN $^1H$ quantitative utilisée est une séquence simple impulsion avec un angle de basculement à 30° et un délai de recyclage de 5 secondes entre chaque acquisition. 128 accumulations sont enregistrées à température ambiante. Les spectres sont calibrés sur le signal du $CDCl_3$ à 7.20ppm en 1H.
La méthode de quantification est identique à celle des échantillons solubles.

3. DSC (calorimétrie différentielle à balayage)

Les températures de fusion, enthalpies de fusion et températures de transition vitreuse Tg des polymères sont mesurées au moyen d'un calorimètre différentiel ("differential scanning calorimeter "). Les copolymères ou le mélange SBR/PLA (témoin) obtenus ont été analysés par DSC sur un appareil DSC Q200 de marque TA instrument dans les conditions opératoires suivantes: 1er chauffage de 20 °C à 200 °C (10 °C/min), refroidissement 200 °C à -70 °C (10°C/min), 2eme chauffage de -70°C à 200 °C (10 °C/min).

Méthode de mesure du taux de cristallinité

La norme ISO 11357-3 :2011 est utilisée pour déterminer la température et l'enthalpie de fusion et de cristallisation des polymères utilisés par analyse calorimétrique différentielle (DSC). L'enthalpie de référence du PLA est souvent donnée à 93kJ/mol

4. Tests mécaniques

a. Expériences de traction 50mm/min

La contrainte à la rupture (MPa), l'allongement à la rupture (%) sont mesurés par des essais de traction selon la norme internationale ASTM D638 (année 2002). Toutes ces mesures de traction sont effectuées dans les conditions normales de température (23 ±2°C) et d'hygrométrie (50 ±5% d'humidité relative), selon la norme internationale ASTM D638 (année 2002). Les mesures sont effectuées sur des éprouvettes de type V à une vitesse de traction de 50 mm/min sur une machine Lloyd LR 10k. La déformation est mesurée en suivant le déplacement de la traverse.

b. Expériences de traction 500mm/min

La contrainte à la rupture (MPa), l'allongement à la rupture (%) sont mesurés par des essais de traction selon la norme française N F T 46-002 de septembre 1988. Toutes ces mesures de traction sont effectuées dans les conditions normales de température (23 ±2°C) et d'hygrométrie (50 ±5% d'humidité relative), selon la norme française N F T 40-101 (décembre 1979). Les mesures sont effectuées sur des éprouvettes H2 à une vitesse de traction de 500mm/min sur une machine Zwik. La déformation est mesurée en suivant le déplacement de la traverse.

A partir des mesures de contraintes et allongement, on calcule les modules sécants dits "nominaux" (ou contraintes apparentes, en MPa) à 10% d'allongement ("MA10") et à 100% d'allongement ("MA100").

c. L'analyse mécanique dynamique (DMA) en température

Les propriétés viscoélastiques linéaires de ces matériaux sont mesurées par élongation sinusoïdale de faible déformation (0,1%). Les mesures sont conduites sur un Analyseur mécanique dynamique (DMA) TA instrument (DMA800) à déformation imposée sur des éprouvettes de forme rectangulaire et de dimensions (mm) : 25 x 5 x 0,5. Les échantillons sont moulés à 183°C pendant 5 minutes, puis découpés avec un emporte-pièce. Le module de conservation élastique E', le module visqueux E" et le facteur de perte tan$\delta$ sont mesurés lors d'un balayage en température mode tension film ; déformation = 10 $\mu$m, fréquence = 1 Hz, -100 °C $\rightarrow$ 170°C (3°C/min).

d. Méthode de mesure des propriétés dynamiques en déformation

Les propriétés dynamiques des matériaux (G', G" et tan$\delta$) ont été mesurées sur une DMA+ 450 de chez Metravib en cisaillement sinusoïdale à une fréquence de 10Hz et à une température de 23°C. Les mesures sont conduites à déformation imposée en effectuant un balayage en déformation de 0,1 à 50% aller et retour. Les éprouvettes utilisées sont constituées de 2 disques de matière de 10mm de diamètre et 2mm d'épaisseur collées entre des cylindres métalliques de 10mm d'épaisseur et 10mm de diamètre avec une colle de type cyanoacrylate. Avant cela, les échantillons sont moulés à 160°C (diamètre 25mm, épaisseur 2mm) pendant 5 minutes, puis découpés à un diamètre de 10mm avec un emporte-pièce.

Le module de conservation élastique G', le module visqueux G" et le facteur de perte tan$\delta$ sont mesurés.

On utilise les abréviations suivantes :

| | |
|---|---|
| SBR | élastomère styrène - butadiène (en anglais : styrene-butadiene rubber) |
| LA | lactide |
| PLA | polylactide |
| % PB 1,2 | taux molaire de motifs polybutadiène 1,2- (vinyliques) |
| % PB 1,4 | taux molaire de motifs polybutadiène 1,4 |
| % PS | taux molaire de motifs styrénique |
| Mol | molaire |
| Mass | massique |
| Comp fin | composition finale |
| DSC | calorimétrie différentielle à balayage |
| DMA | analyse mécanique dynamique |

| | |
|---|---|
| E' | module complexe d'Young |
| Sn/P | ratio molaire $Sn(oct)_2$/ $P(Ph)_3$ |
| Tconsigne | Température de consigne de l'extrudeuse |
| Tmélange | Température du mélange dans l'extrudeuse mesurée |
| Vvis | Vitesse de rotation des vis de l'extrudeuse |
| Tf PLA | Température de fusion de la phase PLA en °C |
| ΔHf PLA | Enthalpie de fusion de la phase PLA en J/g |

**Exemple 1 : copolymères tri-blocs PLA-SBR-PLA obtenus par polymérisation du lactide sur un SBR di-fonctionnalisé amine en extrusion réactive**

Des SBR (styrène-butadiène rubber) di-fonctionnalisés amine primaire aromatique ont été testés. A titre de témoin, on utilise un SBR non fonctionnalisé de Mn plus élevée pour se rapprocher de la Mn des copolymères synthétisés.

Les SBR di-fonctionnalisés amine primaire aromatique ont été synthétisés en suivant le protocole suivant, détaillé ici pour un SBR di-fonctionnalisé :

Préparation du SBR di-fonctionnalisé :

Préparation de la solution d'amorceur (Sa) :

Dans un réacteur de 30L au total, sont ajoutés successivement : 11,5L de méthylcyclohexane (MCH), 1L de 4-bromo-N,N-bis(trimethylsilyl)aniline (préalablement barboté à l'azote), 5,35L d'une solution de s-BuLi à 1,4mol/L dans du cyclohexane et 0,35mol de tétraméthyléthylènediamine (TMED) préalablement purifiée sur $Al_2O_3$.

La réaction est laissée 24h à température ambiante. Cette solution est ensuite conservée à 15°C - 20°C sous azote avant utilisation. Cette solution est par la suite dénommée « solution Sa ».

Polymérisation et couplage :

Les différents constituants suivants sont ajoutés successivement dans le réacteur: 56L de MCH, 350ppm de tétrahydrofurane (THF), 2,7kg de styrène, 5kg de butadiène, 65mL de n-BuLi (0,1mol/L) et 1,07L de la solution Sa.

Après 50min à 50°C la conversion est de 70%, et 0,48 équivalents de $Me_2SiCl_2$ par rapport au $Li^+$ est ajouté pour le couplage. Le milieu réactionnel est agité à 60°C pendant 30min.

On ajouté ensuite 0,4 % en poids, par rapport au poids de l'élastomère, d'un mélange Irganox®2246 (2,2' -Methylenebis (6-t-butyl-4-methylphenol)) / 6PPD (80/20 m/m)

Déprotection :

Les conditions de déprotection sont les suivantes : 2éq d'HCl/amine pendant 48h à 80°C.

La réaction de déprotection terminée, le milieu réactionnel est lavé avec de l'eau brute afin d'extraire le maximum d'acide et remonter le pH de la phase aqueuse à 7. Une solution de soude peut être utilisée pour remonter le pH au-dessus de 7 (0,5éq soude/HCl).

La solution de polymère est ensuite strippée, et l'élastomère fonctionnalisé est séché dans un four rotatif sous azote puis à l'étuve à 60°C sous vide.

Résultats :

La masse molaire moyenne en nombre obtenue est de 87300g/mol (Ip=1,10) et le taux de fonction est de 0,2%mol par mole d'élastomère.

Les microstructures et les macrostructures de ces SBR fonctionnalisés sont données dans le tableau suivant :

Tableau 1

| | Macrostructure | | Microstructure | | |
|---|---|---|---|---|---|
| | Mn (g/mol) | Ip | % PB 1,4 | % PB 1,2 | % PS |
| SBR-A | 87300 | 1,1 | 63,10% | 24,10% | 12,80% |
| SBR-témoin | 179100 | 1,04 | 61,7 % | 20,7% | 17,7% |

On utilise une micro-extrudeuse DSM Xplore de capacité de 15g selon le procédé suivant :

1. Introduction du SBR fonctionnalisé obtenu précédemment (8,4 g) dans la micro-extrudeuse (Tconsigne = 180°C, Tmélange = 170 °C, Vvis = 60 tours/min), de 77% du lactide et de l'U626 (agent antioxydant, ULTRANOX®626, Bis (2,4-di-t-butylphenyl) Pentaerythritol Diphosphite). Le lactide et l'U626 ont été mélangés au préalable en boite à gants dans un ballon bicol. Le SBR fonctionnalisé a été au préalable séché.
2. Mélange/homogénéisation du SBR et du lactide à 150 rpm pendant 2 min
3. Introduction des 23% de lactide restant en présence de la solution catalytique $Sn(oct)_2$ / $P(Ph)_3$. L'ensemble étant contenu dans un bicol préparé préalablement en boite à gants.
4. Polymérisation du PLA (Tconsigne = 180°C, Tmélange = 170 °C, Vvis = 150 tours/min)
5. Lorsque le couple a atteint un plateau, introduction de l'inhibiteur de catalyseur (Irganox® 1425, 28 mg) pour stopper la polymérisation

Dans ce procédé, ILe SBR fonctionnalisé est préalablement séché 12h sous vide à 60°C, jusqu'à une teneur en eau résiduelle inférieure à 300ppm. Les différentes conditions opératoires testées sont reportées dans le tableau suivant :

Tableau 2

| | Matrice | SBR/LA (g/g) | [LA/$Sn(oct)_2$] mol | [SBR/$Sn(oct)_2$] mass | Sn/P (mol) | U626 (% mass. total) |
|---|---|---|---|---|---|---|
| **CP1** | SBR-A | 80/20 | 700 | 373 | 1/1 | 0,06% |
| **CP2** | SBR-A | 70/30 | 700 | 373 | 1/1 | 0,12% |
| **CP3** | SBR-A | 60/40 | 700 | 373 | 1/1 | 0,12% |
| **CP4** | SBR-A | 50/50 | 700 | 373 | 1/1 | 0,12% |
| **CP témoin** | SBR témoin + 1-octanol | 60/40 | 700 | 373 | 1/1 | 0,1% |

Pour chacun des copolymères tri-blocs obtenus (CP1 à CP4), on observe l'apparition sur les spectres RMN $^1H$ de signaux protons -Ph-NH-(C=O)- vers 7,88 ppm, caractéristiques des enchaînements PLA-SBR-PLA. Ces protons sont logiquement absents sur le spectre du matériau obtenu à partir du SBR non fonctionnel (CP témoin).

Les chromatogrammes SEC des matériaux obtenus sont en cohérence avec les structures visées :

- Pour les polymérisations en présence des SBR fonctionnels (copolymères tri-blocs visés), les masses molaires des matériaux obtenus sont supérieures à celle du SBR fonctionnel de départ.

L'augmentation des masses molaires est d'autant plus importante que la fraction en lactide de départ est élevée.

- Pour la polymérisation en présence du SBR non fonctionnel et de l'1-octanol (synthèse d'un homopolymère de PLA visée), le massif principal de la courbe SEC est à la même position que celui de l'élastomère de départ. On observe un petit massif secondaire, cohérent avec l'obtention d'homopolymère de PLA de masse molaire moyenne proche des 9 500 g/mol.

Les autres résultats sont reportés dans le tableau suivant :

Tableau 3

| | Mn PLA (g/mol) $_{1,2}$ | Mn tri-bloc (g/mol) SEC | Ip tri-bloc (SEC) | Comp fin SBR/PLA (mass) RMN $^1H$ |
|---|---|---|---|---|
| **CP1** | 8300 | 112 100 | 2,3 | 84/16 |
| **CP2** | 13005 | 115 000 | 2,2 | 77/23 |
| **CP3** | 23500 | 133 600 | 1,9 | 65/35 |
| **CP4** | 32900 | 118 700 | 3,2 | 57/43 |

(suite)

| | Mn PLA (g/mol) [1,2] | Mn tri-bloc (g/mol) SEC | Ip tri-bloc (SEC) | Comp fin SBR/PLA (mass) RMN $^1$H |
|---|---|---|---|---|
| **CP témoin** | 9500 | 142 300 | 2,8 | 67/33 Mélange |

[1] Mn de chaque bloc PLA calculé par la formule suivante :

$$M_n^{bloc\ PLA} = \frac{1}{2} \cdot \frac{M_n^{SBR,SEC\ éq.PS}}{1 - \%massPLA^{RMN}} \cdot \%massPLA^{RMN}$$

[2] Mn de l'homopolymère de PLA déterminé par SEC en équivalent polystyrène.

Les copolymères CP1 à CP4 sont conformes à l'invention. Le copolymère CP4 est au plus proche des limites de l'invention, la teneur en PLA introduit étant de 50% en poids et la teneur en PLA dans le copolymère obtenu étant de 43%.

La force verticale exercée sur les fourreaux commence à augmenter dès l'introduction du système catalytique. Puis la force atteint un maximum qui correspond à la fin de la polymérisation.

DSC

Les résultats sont reportés dans le tableau suivant :

Tableau 4

| DSC | Tf PLA (°C) | ΔHf PLA (J/g PLA) | Tg SBR (°C) |
|---|---|---|---|
| **CP1** | / | 0 | -55 |
| **CP2** | / | 0 | -54 |
| **CP3** | 168 | 9,1 | -55 |
| **CP4** | 169,5 | 27,0 | -55 |
| CP témoin | 164,1 | 41,5 | |

On constate la présence d'une phase cristalline de PLA pour les copolymères constitués de blocs PLA longs (15k (CP3) et 18k(CP4)) avec des enthalpies de fusion mesurées, de l'ordre de 9 à 27 J/g. Les températures de fusion des phases PLA sont supérieures à 150 °C.

Le mélange témoin montre également un pic de fusion à 164°C et la cristallinité est beaucoup plus élevée (ΔHf = 41 J/g).

TESTS DE TRACTION à 50 mm/min

Les résultats sont reportés dans le tableau suivant :

Tableau 5

| TRACTION | Contrainte rupture (MPa) | Allongement rupture (%) | MA10 (MPa) | MA100 (MPa) |
|---|---|---|---|---|
| **CP1** | 1,93 | 542 | 1,1 | 0,7 |
| **CP2** | 4,2 | 547 | 1,6 | 1,0 |
| **CP3** | 10,1 | 520 | 3,8 | 1,8 |
| **CP4** | 6 | 138 | 9,4 | 4,8 |
| CP témoin | 0,34 | 16 | 1,5 | |

On constate :

- Que l'allongement à la rupture est supérieur à 100% pour chacun des copolymères, il est même supérieur à 500% pour les 3 copolymères comprenant au plus 40% en poids de PLA (CP1, CP2, CP3) : 450 % à 640 %. Il est

indépendant de la longueur des blocs PLA.

- le copolymère CP4 ayant une teneur en PLA de 43% en masse présente l'allongement à la rupturele plus faible, à la limite d'un copolymère qui commence à avoir un comportement qui se rapproche d'un thermoplastique plutôt que d'un élastomère thermoplastique.
- Les modules MA10 et MA100 aux faibles et moyennes déformations augmentent avec la quantité de PLA dans le copolymère.
- Les contraintes à la rupture augmentent avec le taux de PLA pour les 3 copolymères comprenant au plus 40% en poids de PLA CP1 à CP3, puis diminue pour le copolymère CP4 malgré sa plus forte rigidité à basse déformation.
- Contrairement aux copolymères, le mélange témoin n'a pas de tenue mécanique.

DMA

Les résultats sont reportés dans le tableau suivant :

Tableau 6

| DMA | Tg SBR (° C) - max de tanδ | E' à 40°C (MPa) |
|---|---|---|
| CP1 | -59 | 1,76 |
| CP3 | -61 | 2,96 |
| CP témoin | -47 | Pas de tenue mécanique |

On constate une chute importante de E' au niveau de la Tg de l'élastomère vers -60°C suivi d'un plateau caoutchoutique pour les copolymères sur un domaine de température [-20 °C, 90 °C]. Par comparaison, le mélange témoin SBR / PLA présente également un plateau caoutchoutique mais son domaine de température est plus restreint [-20°C, 20 °C].

**Exemple 2 : copolymères peigne SBR-g-PLA obtenus par polymérisation du lactide sur un SBR fonctionnel alcool en extrusion réactive**

Des copolymères de type peigne (SBR-g-PLA) ont été synthétisés par polymérisation du lactide, en présence d'un SBR fonctionnel possédant des groupements mercapto 1-butanol greffés le long de la chaîne.

Ce SBR fonctionnel est préparé en suivant la procédure suivante.

Greffage :

Après dissolution complète de 110g de SBR dans 2,75L de methylcyclohexane, 6,3mL de 4-mercaptobutanol, préalablement dissous dans 135mL de dichlorométhane, sont ajoutés. Une fois la température du milieu réactionnel à 80°C, 1g de peroxyde de lauroyle dissout dans 50mL de methylcyclohexane sont introduits sous agitation. Le milieu est maintenu à 80°C sous agitation pendant une nuit.

A 80°C, 2 équivalents par rapport au peroxyde d'Irganox®2246 sont ajoutés. Après 15 minutes, 2 équivalents par rapport au peroxyde de 6-PPD sont additionnés. Après refroidissement, une ou deux coagulations dans le méthanol sont réalisées.

L'élastomère est ensuite resolubilisé, et 0,4 % en poids, par rapport au poids de l'élastomère, d'un mélange Irganox®2246/6PPD (80/20) est ajouté. L'élastomère est alors séché sous vide à 50°C.

Résultats :

Le greffage obtenu est de 1,3%mol, et le rendement massique obtenu est de 82%.

Les microstructures et macrostructures de ce SBR fonctionnel sont données dans le tableau suivant :

Tableau 7

| Macrostructure | | Microstructure | | | |
|---|---|---|---|---|---|
| Mn (g/mol) | Ip | % PB 1,4 | % PB 1,2 | % PS | % OH |
| 204800 | 1,3 | 19,7 | 62,2 | 16,8 | 1,3 |

Conditions de la polymérisation : la synthèse a été réalisée en micro-extrudeuse conformément au protocole expérimental décrit dans l'exemple 1.

Les différentes conditions opératoires testées sont reportées dans le tableau suivant :

Tableau 8

| | SBR/LA (g/g) | [LA/Sn(oct)$_2$] mol | [SBR/Sn(oct)$_2$] mass | Sn/P (mol) | U626 (% mass.total) |
|---|---|---|---|---|---|
| **CP5** | 60/40 | 700 | 373 | 1/1 | 0,07% |

Pour le copolymère peigne obtenu (CP5), on observe sur les spectres RMN $^1H$ que le signal à 3,64 ppm a disparu. En conséquence toutes les fonctions $-S-(CH_2)_4-OH$ ont amorcé la polymérisation du lactide.

Les résultats sont reportés dans le tableau suivant :

Tableau 9

| | Mn bloc PLA[1] (g/mol) | Mn tri-bloc (g/mol) SEC | Ip tri-bloc | Comp fin SBR/PLA (mass) RMN $^1H$ |
|---|---|---|---|---|
| **CP5** | 2300 | 229 000 | 2,1 | 63/37 |

[1] Mn de chaque bloc calculé par la formule suivante :

$$M_n^{bloc\ PLA} = \frac{1}{Nombre\ de\ fonction\ OH\ par\ chaine} \cdot \frac{M_n^{SBR,SEC\ \acute{e}q.PS}}{1 - \%massPLA^{RMN}} \cdot \%massPLA^{RMN}$$

TESTS DE TRACTION à 50 mm/min

Les résultats sont reportés dans le tableau suivant :

Tableau 10

| TRACTION | Contrainte rupture (MPa) | Allongement rupture (%) |
|---|---|---|
| CP5 | 11,8 | 443 |

Les résultats des tests de traction montrent :

- un allongement à la rupture moyen de 440 %
- une contrainte à la rupture moyenne de 11,8 MPa

DMA

Les résultats des tests de DMA montrent :

- l'apparition d'un plateau caoutchoutique
- La plage de tenue en température jusqu'à 60°C.

**Exemple 3 : compositions de copolymères tri-blocs PLA-SBR-PLA obtenus par polymérisation du lactide sur un SBR fonctionnel amine en extrusion réactive - procédé continu**

Obtention du copolymère tri-bloc

Les essais ont également été conduits dans une extrudeuse bi-vis de marque Collins, ayant un rapport L/D de 56 et comprenant 14 zones (L/D=4) de chauffage indépendantes, permettant une synthèse en continu. La vitesse de rotation des vis est de 70 tours/min. Les températures de consigne des fourreaux sont reportées dans le tableau suivant :

Tableau 11

| Températures fourreaux (°C) | | | | | | | | | | | | | |
|---|---|---|---|---|---|---|---|---|---|---|---|---|---|
| **1** | **2** | **3** | **4** | **5** | **6** | **7** | **8** | **9** | **10** | **11** | **12** | **13** | **14** |
| 50 | 80 | 175 | 175 | 175 | 175 | 175 | 175 | 175 | 175 | 175 | 175 | 175 | 175 |

Le SBR di-fonctionnalisé amine primaire aromatique a été synthétisé en suivant le protocole donné à l'exemple 1.

Les microstructures et macrostructures de ce SBR sont celles du SBR-A données dans le tableau 1. Ce SBR est séché 12h à 60°C sous air.

Le lactide est introduit le fourreau n°1, le SBR dans le fourreau 2 et le système catalytique dans le fourreau 1 avec le lactide. Le ratio massique SBR/lactide est de 60/40. Le ratio molaire [LA/$Sn(oct)_2$] est de 700 et du $P(Ph)_3$ est ajoutée en une quantité permettant d'avoir un ratio molaire (Sn/P) de 1/1.

Les conversions et les propriétés du copolymère obtenu sont reportées dans le tableau suivant :

Tableau 12

| | Composition finale SBR/PLA (RMN $^1$H) | Macrostructure tri-bloc | |
|---|---|---|---|
| | | Mn éq PS (g/mol) | Ip |
| CP6 | 75,7/24,3 | 121300 | 3,2 |

Réalisation des compositions

On utilise dans les compositions selon l'invention le copolymère tri-bloc CP6 décrit précédemment. Dans certaines compositions selon l'invention, ce copolymère peut être mélangé avec un élastomère non fonctionnel, un SBR

ayant une Mn de 180 000 g/mol.

Dans les compositions témoins, on utilise un élastomère fonctionnel (ayant une bonne interaction avec la silice), ici un SBR monofonctionnel silanol en extrémité de chaîne ayant une Mn de 150 000 g/mol.

Les compositions suivantes sont réalisées sur un mélangeur interne avec des rotors de type came.

Pour les essais M1 à M9 qui suivent, on procède de la manière suivante :

On introduit dans un mélangeur interne (taux de remplissage final : environ 70% en volume), dont la température initiale de cuve est d'environ 180°C, le copolymère tri-bloc CP6 et éventuellement l'élastomère diénique. Puis après 1 minute de malaxage, le cas échéant on introduit la charge renforçante (noir de carbone ou silice), ainsi que les agents de couplage et la diphenylguanidine (DPG). Les divers autres ingrédients à l'exception du système de vulcanisation sont introduits après 3 minutes de mélangeage et au-dessus de 170°C. On conduit alors un travail thermomécanique (phase non-productive) en une étape, qui dure au total environ 5 à 6 min, jusqu'à atteindre une température maximale de « tombée » de 180°C. On récupère le mélange ainsi obtenu, on le refroidit puis on incorpore du soufre et un accélérateur type sulfénamide sur un mélangeur (homo-finisseur) à 80 °C, en mélangeant le tout (phase productive) pendant un temps approprié (par exemple une 5 à 10 minutes).

Les compositions ainsi obtenues sont ensuite calandrées sous la forme de plaques (épaisseur de 2 à 3 mm) et cuites pendant 40min à 180°C sous presse (10t) pour la mesure de leurs propriétés physiques ou mécaniques.

Pour les essais T1 à T4 qui suivent, on procède de la manière suivante :

On introduit dans un mélangeur interne (taux de remplissage final : environ 70% en volume), dont la température initiale de cuve est d'environ 110°C, l'élastomère diénique et simultanément 50% en poids de la silice avec 50% en poids des agents de couplage et 50% en poids de la DPG. Puis après 1 à 2 minutes de malaxage, le reste de silice, agent de couplage et DPG sont introduits. Les divers autres ingrédients à l'exception du système de vulcanisation sont introduits après 4 minutes de mélangeage et au-dessus de 140°C. On conduit alors un travail thermomécanique (phase non-productive) en une étape, qui dure au total environ 5 à 6 min, jusqu'à atteindre une température maximale de « tombée » de 160°C. On récupère le mélange ainsi obtenu, on le refroidit puis on incorpore du soufre et un accélérateur type sulfénamide sur un mélangeur (homo-finisseur) à 40 °C, en mélangeant le tout (phase productive) pendant un temps approprié (par exemple une 5 à 10 minutes).

Les compositions ainsi obtenues sont ensuite calandrées sous la forme de plaques (épaisseur de 2 à 3 mm) et cuites pendant 60min à 150°C sous presse (10t) pour la mesure de leurs propriétés physiques ou mécaniques.

Dans le tableau qui suit sont détaillées les compositions testées, sachant que

(1) Copolymère tri-bloc PLA-b-SBR-b-PLA (CP6) décrit plus haut

(2) SBR non fonctionnel ayant une Mn de 150 000 g/mol, un Ip = 1,9, et présentant un pourcentage de styrène de 26% massique et de vinyl 1,2 de 18% massique

(3) SBR fonctionnel monofonctionel silanol en extrémité de chaîne ayant une Mn de 180000 g/mol, un Ip = 1,8, et présentant un pourcentage de styrène de 26% massique et de vinyl 1,2 de 17,5% massique

(4) Silice Zeosil 1165MP de la société Solvay

(5) Agent de couplage TESPT de la société Degussa

(6) Agent de couplage (3-Glycidyloxypropyl)triethoxysilane

(7) Noir de carbone N234

(8) Résine Exxon Oppera 374

(9) N-1,3-diméthylbutyl-N-phénylparaphénylènediamine

(10) DPG : Diphenylguanidine

(11) Acide Stéarique

(12) ZnO

(13) Soufre

(14) N-cyclohexyl-2-benzothiazyl-sulfénamide

| Compositions | M1 (a) | M2 (b) | M3 (a) | M4 (a) | M5 (a) | M6 (a) | M7 (b) | M8 (b) | M9 (a) | T1 | T2 | T3 | T4 |
|---|---|---|---|---|---|---|---|---|---|---|---|---|---|
| CP6 (1) | 100 | 50 | 100 | 100 | 100 | 100 | 50 | 50 | 100 | | | | |
| SBR (2) | | 50 | | | | | 50 | 50 | | | | | |
| SBR (3) | | | | | | | | | | 100 | 100 | 100 | 100 |
| Silice 160MP (4) | | | 15 | 30 | | | 15 | 30 | | 50 | 58 | 79 | 103 |
| Si 69 (5) | | | | | | | | | | 3,2 | 4,6 | 6,3 | 8,2 |
| Agent de couplage (6) | | | 1,1 | 2,2 | | | 1,1 | 2,2 | | | | | |
| Noir N234 (7) | | | | | 15 | 30 | | | | | | | |
| Résine Oppera (8) | | | | | | | | | 20 | | | | |
| 6PPD (9) | | | 2 | 2 | 2 | 2 | 2 | 2 | 2 | | | | |
| DPG (10) | | | 0,5 | 1 | | | 0,5 | 1 | | 0,63 | 0,9 | 1,23 | 1,6 |
| ACIDE STEARIQUE (11) | | | 2 | 2 | 2 | 2 | 2 | 2 | 2 | | | | |
| ZnO (12) | | | 3 | 3 | 3 | 3 | 3 | 3 | 3 | | | | |
| SOUFRE (13) | 1 | 1 | 1 | 1 | 1 | 1 | 1 | 1 | 1 | 1,5 | 1,5 | 1,5 | 1,5 |
| CBS (14) | 2 | 2 | 2 | 2 | 2 | 2 | 2 | 2 | 2 | 1 | 1 | 1 | 1 |
| (a) Exemple selon l'invention Tableau 13<br>(b) Exemple de référence | | | | | | | | | | | | | |

CARACTERISATION DE LA COMPOSITION

La composition du mélange M1 de référence, c'est-à-dire uniquement le copolymère tri-bloc CP6 ayant subi le procédé de mélangeage est caractérisée avant réticulation par RMN. Le tableau suivant présente les résultats.

Tableau 14

| | Composition tri-bloc |
|---|---|
| | % massique SBR/PLA (RMN $^1$H) |
| CP6 | 75,7/24,3 |
| M1 | 75,2/24,8 |

La composition en PLA du copolymère tri-bloc n'évolue pas au cours du mélangeage.

TESTS DE TRACTION à 500 mm/min

Les résultats de modules à 10 et 100% de déformation sont reportés dans le tableau suivant :

Tableau 15

| Traction | M1 | M2 | M3 | M4 | M5 | M6 | M7 | M8 | M9 |
|---|---|---|---|---|---|---|---|---|---|
| MA10 (MPa) | 3,6 | 1,6 | 11,7 | 18,4 | 8,1 | 17,3 | 7,7 | 10,7 | 1,7 |

(suite)

| Traction | M1 | M2 | M3 | M4 | M5 | M6 | M7 | M8 | M9 |
|---|---|---|---|---|---|---|---|---|---|
| MA100 (MPa) | 1,4 | 0,6 | 1,8 | 2,4 | 1,8 | 3,3 | 1,3 | 1,5 | 0,7 |

A partir de ces résultats, différentes comparaisons peuvent être faites :

- Entre M1, M2 et M9, l'ajout d'un polymère diénique (SBR) ou de résine permet de diminuer la rigidité du matériau.
- Entre M1, M3 et M4, l'ajout de silice permet de renforcer le matériau en augmentant fortement sa rigidité.
- Entre M1, M5 et M6, l'ajout de noir de carbone permet de renforcer le matériau en augmentant fortement sa rigidité
- Entre M2, M7 et M8, même après dilution du copolymère tri-bloc par un autre élastomère diénique, l'ajout de silice permet de renforcer le matériau en augmentant fortement sa rigidité

Les résultats de modules à 10 et 100% de déformation des matériaux témoins à base de silice sont reportés dans le tableau suivant :

Tableau 16

| Traction | T1 | T2 | T3 | T4 |
|---|---|---|---|---|
| MA10 (MPa) | 5,2 | 5,6 | 9,1 | 14,0 |
| MA100 (MPa) | 1,5 | 1,5 | 2,2 | 3,2 |

En comparant les modules à 10 et 100 % de déformation des mélanges à base de copolymère tri-bloc CP6 avec les mélanges témoins composés d'un élastomère diènique et de quantité croissante de silice :

- Entre (M1, M3 et M4) et (T1, T2, T3 et T4) l'ajout de faibles quantités de silice au copolymère tri-bloc CP6 permet d'obtenir des rigidités comparables à celle des mélanges témoins. Par exemple, CP6 avec 15pce de silice à une rigidité (MA10) équivalente à un mélange SBR avec 90pce de silice (interpolation entre T3 et T4).
- Entre (M2, M7 et M8) et (T1, T2, T3 et T4) l'ajout de faibles quantités de silice au copolymère tri-bloc CP6 préalablement dilué avec un élastomère diénique permet d'obtenir des rigidités comparables à celle des mélanges témoins.
- Entre (M1, M5 et M6) et (T1, T2, T3 et T4) l'ajout de faibles quantités de noir de carbone au copolymère tri-bloc CP6 permet d'obtenir des rigidités comparable à celle des mélanges témoins. Par exemple, CP6 avec 15pce de N234 à une rigidité (MA10) équivalente à un mélange SBR avec 72pce de silice (interpolation entre T2 et T3).

## Revendications

1. Pneumatique dont un de ses éléments constitutifs comprend une composition de caoutchouc à base d'au moins une matrice élastomère comprenant un copolymère élastomère diénique /polylactide, le pourcentage massique en polylactide dans ledit copolymère étant compris entre 10% et 50% en poids, par rapport au poids du copolymère dans lequel le copolymère élastomère diénique /polylactide est choisi parmi :

    - un copolymère tri-bloc, de structure PLA-élastomère diénique-PLA, de masse molaire moyenne en nombre, Mn, allant de 50 000 g/mol à 300 000 g/mol ;
    - un copolymère peigne, ayant un tronc élastomère diénique et des blocs PLA pendants le long du tronc, de masse molaire moyenne en nombre, Mn, allant de 100 000 g/mol à 600 000 g/mol ; et
    - un copolymère di-bloc, de structure PLA-élastomère diénique, de masse molaire moyenne en nombre, Mn, allant de 25000 g/mol à 200000 g/mol;

    les masses molaires sont déterminées par chromatographie d'exclusion stérique en équivalent polystyrène,
    lorsque le copolymère est un copolymère tri-bloc ou un copolymère peigne, la composition peut ne pas contenir de système de réticulation,
    lorsque le copolymère est un copolymère di-bloc, la composition contient un système de réticulation,
    le copolymère élastomère diénique /polylactide représentant au moins 65% en masse de la matrice élastomère.

2. Pneumatique selon la revendication précédente, **caractérisé en ce que**, dans le copolymère élastomère diénique

/polylactide, le pourcentage massique en polylactide varie de 15% à 40 % en poids, par rapport au poids du copolymère.

3. Pneumatique selon l'une quelconque des revendications précédentes, **caractérisé en ce que** l'élastomère diénique est choisi parmi par les polybutadiènes (en abrégé "BR"), les polyisoprènes (IR) de synthèse, le caoutchouc naturel (NR), les copolymères de butadiène, les copolymères d'isoprène, les copolymères d'éthylène et de diène et les mélanges de ces polymères.

4. Pneumatique selon l'une quelconque des revendications précédentes, **caractérisé en ce que** le copolymère est un copolymère tri-bloc ou un copolymère peigne et la composition ne contient pas de système de réticulation.

5. Pneumatique selon l'une quelconque des revendications précédentes, **caractérisé en ce que** la composition de caoutchouc comprend une charge renforçante.

6. Pneumatique selon la revendication précédente, **caractérisé en ce que** la charge renforçante comprend un noir de carbone.

7. Pneumatique selon les revendications 5 ou 6, **caractérisé en ce que** la charge renforçante comprend une charge inorganique renforçante.

8. Pneumatique selon la revendication précédente, **caractérisé en ce que** la charge inorganique renforçante est une silice.

9. Pneumatique selon l'une quelconque des revendications 7 à 8, **caractérisé en ce que** la composition de caoutchouc comprend un agent de couplage.

10. Pneumatique selon l'une quelconque des revendications précédentes, **caractérisée en ce que** la composition de caoutchouc comprend un plastifiant, une résine plastifiante ou leurs mélanges.

11. Pneumatique selon l'une quelconque des revendications précédentes, **caractérisée en ce que** ledit élément constitutif est une bande de roulement.

## Patentansprüche

1. Reifen, wobei eines seiner Aufbauelemente eine Kautschukzusammensetzung auf Basis mindestens einer Elastomermatrix, die ein Dienelastomer/Polylactid-Copolymer umfasst, umfasst, wobei der Massenprozentanteil einen Polylactid in dem Copolymer zwischen 10 und 50 Gew.-%, bezogen auf das Gewicht des Copolymers, liegt, wobei das Dienelastomer/Polylactid-Copolymer aus

   - einem Triblockcopolymer mit der Struktur PLA-Dienelastomer-PLA, wobei die zahlenmittlere Molmasse Mn im Bereich von 50.000 g/mol bis 300.000 g/mol liegt,
   - einem Kammcopolymer mit einer Dienelastomer-Hauptkette und seitenständigen PLA-Blöcken entlang der Hauptkette, wobei die zahlenmittlere Molmasse Mn im Bereich von 100.000 g/mol bis 600.000 g/mol liegt,
   - einem Diblockcopolymer mit der Struktur PLA-Dienelastomer, wobei die zahlenmittlere Molmasse Mn im Bereich von 25.000 g/mol bis 200.000 g/mol liegt,

   ausgewählt ist,
   wobei die Molmassen durch Größenausschlusschromatographie als Polystyrol-Äquivalent bestimmt werden, dann, wenn es sich bei dem Copolymer um ein Triblockcopolymer oder ein Kammcopolymer handelt, die Zusammensetzung kein Vernetzungssystem enthält, dann, wenn es sich bei dem Copolymer um ein Diblockcopolymer handelt, die Zusammensetzung ein Vernetzungssystem enthält,
   wobei das Dienelastomer/Polylactid-Copolymer mindestens 65 Massen-% der Elastomermatrix ausmacht.

2. Reifen nach dem vorhergehenden Anspruch, **dadurch gekennzeichnet, dass** in dem Dienelastomer/Polylactid-Copolymer der Massenprozentanteil an Polylactid 15 bis 40 Gew.-%, bezogen auf das Gewicht des Copolymers, variiert.

3. Reifen nach einem der vorhergehenden Ansprüche, **dadurch gekennzeichnet, dass** das Dienelastomer aus Polybutadienen (abgekürzt "BR"), synthetischen Polyisoprenen (IR), Naturkautschuk (NR), Butadien-Copolymeren, Isopren-Copolymeren, Ethylen-Dien-Copolymeren und Mischungen dieser Copolymere ausgewählt ist.

4. Reifen nach einem der vorhergehenden Ansprüche, **dadurch gekennzeichnet, dass** es sich bei dem Copolymer um ein Diblockcopolymer handelt und die Zusammensetzung ein Vernetzungssystem enthält.

5. Reifen nach einem der vorhergehenden Ansprüche, **dadurch gekennzeichnet, dass** die Kautschukzusammensetzung an verstärkenden Füllstoff umfasst.

6. Reifen nach dem vorhergehenden Anspruch, **dadurch gekennzeichnet, dass** der verstärkende Füllstoff einen Ruß umfasst.

7. Reifen nach Anspruch 5 oder 6, **dadurch gekennzeichnet, dass** der verstärkende Füllstoff einen verstärkenden anorganischen Füllstoff umfasst.

8. Reifen nach dem vorhergehenden Anspruch, **dadurch gekennzeichnet, dass** es sich bei dem verstärkenden anorganischen Füllstoff um eine Kieselsäure handelt.

9. Reifen nach einem der Ansprüche 7 bis 8, **dadurch gekennzeichnet, dass** die Kautschukzusammensetzung ein Kupplungsmittel umfasst.

10. Reifen nach einem der vorhergehenden Ansprüche, **dadurch gekennzeichnet, dass** die Kautschukzusammensetzung einen Weichmacher, ein Weichmacherharz oder Mischungen davon umfasst.

11. Reifen nach einem der vorhergehenden Ansprüche, **dadurch gekennzeichnet, dass** es sich bei dem Aufbauelement um eine Lauffläche handelt.

## Claims

1. Tyre, one of its constituent elements of which comprises a rubber composition based on at least one elastomer matrix comprising a diene elastomer/polylactide copolymer, the percentage by weight of polylactide in the said copolymer being between 10% and 50% by weight, with respect to the weight of the copolymer, in which the diene elastomer/polylactide copolymer is selected from :

   ◦ a triblock of PLA-diene elastomer-PLA structure, with a number-average molar mass, Mn, ranging from 50 000 g/mol to 300 000 g/mol,
   ◦ a comb copolymer having a diene elastomer backbone and pendant PLA blocks along the backbone, with a number-average molar mass, Mn, ranging from 100 000 g/mol to 600 000 g/mol; and
   ◦ a diblock copolymer of PLA-diene elastomer structure, with a number-average molar mass, Mn, ranging from 25 000 g/mol to 200 000 g/mol;

   the molar masses being measured with the polystyrene equivalent size exclusion chromatography technique,
   when the copolymer is a triblock copolymer or a comb copolymer, the composition may not contain a cross-linking system,
   when the copolymer is a diblock copolymer, the composition contains a cross-linking system,
   the diene elastomer/polylactide copolymer represents at least 65% by weight of the elastomer matrix.

2. Tyre according to the preceding claim, **characterized in that**, in the diene elastomer/polylactide copolymer, the percentage by weight of polylactide ranges from 15% to 40% by weight, with respect to the weight of the copolymer.

3. Tyre according to any one of the preceding claims, **characterized in that** the diene elastomer is chosen from polybutadienes (abbreviated to "BRs"), synthetic polyisoprenes (IRs), natural rubber (NR), butadiene copolymers, isoprene copolymers, copolymers of ethylene and diene, and the mixtures of these polymers.

4. Tyre according to any one of the preceding claims, **characterized in that** the copolymer is a triblock copolymer or a comb copolymer and the composition does not contain a crosslinking system.

5. Tyre according to any one of the preceding claims, **characterized in that** the rubber composition comprises a reinforcing filler.

6. Tyre according to the preceding claim, **characterized in that** the reinforcing filler comprises a carbon black.

7. Tyre according to Claim 8 or Claim 9, **characterized in that** the reinforcing filler comprises a reinforcing inorganic filler.

8. Tyre according to the preceding claim, **characterized in that** the reinforcing inorganic filler is a silica.

9. Tyre according to either one of Claims 7 and 8, **characterized in that** the rubber composition comprises a coupling agent.

10. Tyre according to any one of the preceding claims, **characterized in that** the rubber composition comprises a plasticizer, a plasticizing resin or their mixtures.

11. Tyre according to any one of the preceding claims, **characterized in that** the said constituent element is a tread.

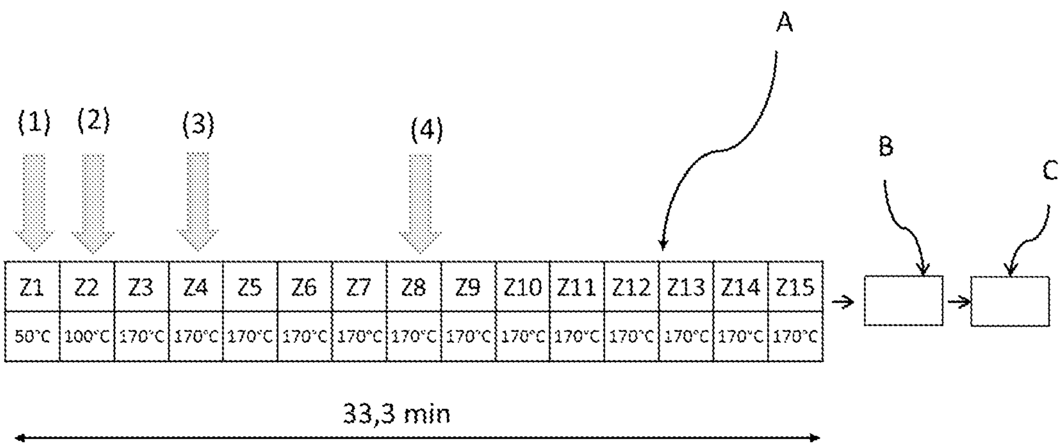
A
(1)
(2)
(3)
(4)
B
C
Z1
Z2
Z3
Z4
Z5
Z6
Z7
Z8
Z9
Z10
Z11
Z12
Z13
Z14
Z15
50°C
100°C
170°C
170°C
170°C
170°C
170°C
170°C
170°C
170°C
170°C
170°C
170°C
170°C
170°C
33,3 min

**Fig. 1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- JP 2012158738 B
- JP 2010001439 B
- WO 2014095925 A
- WO 9802480 A
- US 6143863 A
- EP 912624 A
- US 6114495 A
- WO 2007121936 A
- WO 2008055683 A
- WO 2009138460 A
- WO 9902590 A


### Littérature non-brevet citée dans la description


- **SCHULZ et al.** *Journal of Polymer Science,* 1977, vol. 15, 2401-2410
- **NAHRAIN E. KAMBER et al.** Organocatalytic ring-opening polymerization. *Chem. Rev.,* 2007, vol. 107, 5813-5840
- **MATTHEW K. KIESEWETTER et al.** *J. Org. Chem.,* 2009, vol. 74, 6490-9496
- **STEFEN NAUMANN et al.** *ACS Macro Lett.,* 2016, vol. 5, 134-138
- **R. MILDENBERG, M. ZANDER ; G. COLLIN.** Hydrocarbon Resins. VCH, 1997